(19) Europäisches Patentamt
European Patent Office
Office européen des brevets

(11) EP 2 889 940 A1

(12) **EUROPEAN PATENT APPLICATION**
published in accordance with Art. 153(4) EPC

(43) Date of publication:
**01.07.2015 Bulletin 2015/27**

(21) Application number: **13831548.6**

(22) Date of filing: **12.08.2013**

(51) Int Cl.:
***H01M 8/02*** *(2006.01)* ***C08F 297/04*** *(2006.01)*
***C08J 3/24*** *(2006.01)* ***H01B 1/06*** *(2006.01)*
***H01B 1/12*** *(2006.01)* ***H01M 8/10*** *(2006.01)*

(86) International application number:
**PCT/JP2013/071833**

(87) International publication number:
**WO 2014/030573 (27.02.2014 Gazette 2014/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.08.2012 JP 2012184114**

(71) Applicant: **Kuraray Co., Ltd.**
**Okayama 710-0801 (JP)**

(72) Inventors:
- **TOSHINARI, Kenta**
**Tsukuba-shi**
**Ibaraki 305-0841 (JP)**
- **IDE, Sayaka**
**Tsukuba-shi**
**Ibaraki 305-0841 (JP)**
- **YAMASHITA, Taketomo**
**Tsukuba-shi**
**Ibaraki 305-0841 (JP)**
- **ONO, Tomohiro**
**Tsukuba-shi**
**Ibaraki 305-0841 (JP)**
- **SUGOH, Nozomu**
**Tsukuba-shi**
**Ibaraki 305-0841 (JP)**

(74) Representative: **Gallagher, Kirk James**
**D Young & Co LLP**
**120 Holborn**
**London EC1N 2DY (GB)**

(54) **POLYELECTROLYTE FILM**

(57) Provided is a polymer electrolyte membrane that is formed of a fluorine free material, is soft and hardly cracks, and is excellent in hot water resistance. The polymer electrolyte membrane is obtained by crosslinking a block copolymer (Z) containing a polymer block (A) containing a structural unit derived from an aromatic vinyl compound and having an ion-conducting group; and an amorphous polymer block (B) containing a structural unit derived from an unsaturated aliphatic hydrocarbon and free of any ion-conducting group, the block copolymer (Z) being crosslinked with a crosslinking agent (X) having, in a molecule thereof, two or more aromatic rings of which one or more hydrogen atoms are substituted with hydroxy groups.

EP 2 889 940 A1

## Description

### Technical Field

The present invention relates to a polymer electrolyte membrane useful in a polymer electrolyte fuel cell.

### Background Art

In recent years, fuel cells have been attracting attention as power generation systems each having high efficiency. The fuel cells are classified into a molten carbonate type, a solid oxide type, a phosphoric acid type, a polymer electrolyte, and the like depending on the kinds of their electrolytes. Among those fuel cells, the polymer electrolyte fuel cell has a structure in which a polymer electrolyte membrane is sandwiched between electrodes (an anode and a cathode), and generates electricity by supplying a fuel formed of a reducing agent (typically hydrogen or methanol) to the anode and supplying an oxidizing agent (typically air) to the cathode. Studies have been conducted on the application of the polymer electrolyte fuel cell to a power source for an automobile, a power source for portable equipment, a domestic cogeneration system, and the like from the viewpoints of low-temperature operability, reductions in size and weight, and the like.

A perfluorocarbon sulfonic acid-based polymer has often been used as a material for the polymer electrolyte membrane to be used in the polymer electrolyte fuel cell because of its chemical stability. However, environmental loads at the time of its production and at the time of its disposal become problems because the polymer contains fluorine.

In view of such circumstances, a polymer electrolyte membrane formed of a material that does not contain fluorine (fluorine free material) has been required in recent years. For example, a polymer electrolyte membrane formed of polyether ether ketone (PEEK) having introduced therein a sulfonic acid group has been known (see Patent Literature 1). Although such polymer electrolyte membrane is excellent in heat resistance, the membrane is poor in practicality because the membrane is hard and brittle, and is hence liable to crack.

Meanwhile, there has been known a polymer electrolyte membrane formed of a block copolymer containing: a polymer block containing a structural unit derived from an aromatic vinyl compound and having an ion-conducting group; and a flexible polymer block (see Patent Literature 2). Such polymer electrolyte membrane is soft and hardly cracks.

In addition, the membrane is excellent in ion conductivity because the polymer block having an ion-conducting group undergoes microphase separation with the flexible polymer block, and that forms an ion-conducting channel.

Meanwhile, an increase in temperature at which a fuel cell using hydrogen as a fuel is used has been required for increasing its output. To meet such requirement, studies have been conducted on the durability of a polymer electrolyte membrane against hot water (at, for example, 90°C or more) (hot water resistance), specifically the suppression of the elution of the polymer electrolyte membrane due to the hot water and the suppression of a reduction in voltage of the cell in long-term operation under high temperature in association with the elution.

For example, it has been known that the hot water resistance of the polymer electrolyte membrane is improved by: producing the flexible polymer block from a structural unit derived from a vinyl-based compound; and using a block copolymer obtained by crosslinking the flexible polymer block with 1,2-polybutadiene or the like as a main component (see Patent Literature 3).

### Citation List

#### Patent Literature

[PTL 1] JP 06-93114 A
[PTL 2] WO 2006/070929 A1
[PTL 3] WO 2012/043400 A1

### Summary of Invention

#### Technical Problem

However, the hot water resistance is still susceptible to improvement in consideration of an additional increase in output of the polymer electrolyte fuel cell.

Therefore, an object of the present invention is to provide a polymer electrolyte membrane that is formed of a fluorine free material, is soft and hardly cracks, and is excellent in hot water resistance.

Solution to Problem

According to one embodiment of the present invention, the above-mentioned object can be achieved by providing a polymer electrolyte membrane, which is obtained by crosslinking a block copolymer (Z) containing a polymer block (A) containing a structural unit derived from an aromatic vinyl compound and having an ion-conducting group (hereinafter simply referred to as "polymer block (A)"), and an amorphous polymer block (B) containing a structural unit derived from an unsaturated aliphatic hydrocarbon and free of any ion-conducting group (hereinafter simply referred to as "polymer block (B)"), the block copolymer (Z) being crosslinked with a crosslinking agent (X) having, in a molecule thereof, two or more aromatic rings of which one or more hydrogen atoms are substituted with hydroxy groups (hereinafter simply referred to as "crosslinking agent (X)").

Advantageous Effects of Invention

According to one embodiment of the present invention, it is possible to provide the polymer electrolyte membrane that is formed of a fluorine free material, is soft and hardly cracks, and is excellent in hot water resistance.

Description of Embodiments

[Polymer electrolyte Membrane]

In a polymer electrolyte membrane of the present invention, a polymer block (A) and a polymer block (B) form a microphase-separated structure. As a result, a phase containing the polymer block (A) forms an ion-conducting channel and hence the membrane shows good ion conductivity.
It should be noted that the term "microphase separation" as used herein means phase separation in a microscopic sense, and more specifically, means such phase separation that a domain size to be formed is equal to or less than the wavelength of visible light (from 3,800 to 7,800 Å).

The thickness of the polymer electrolyte membrane of the present invention falls within the range of preferably from 1 to 500 μm, more preferably from 5 to 300 μm, still more preferably from 7 to 50 μm, particularly preferably from 10 to 30 μm, most preferably from 15 to 25 μm from the viewpoints of its mechanical strength, handleability, and the like. When the thickness is 1 μm or more, the mechanical strength and fuel-shielding property of the polymer electrolyte membrane are good, and when the thickness is 500 μm or less, the ion conductivity of the polymer electrolyte membrane is good.

The polymer electrolyte membrane of the present invention may be a multilayer membrane including at least one polymer electrolyte layer in which a block copolymer (Z) containing the polymer block (A) and the polymer block (B) is crosslinked with a crosslinking agent (X).

(Block Copolymer (Z))

The block copolymer (Z) is obtained by introducing an ion-conducting group into a polymer block ($A_0$) containing a structural unit derived from an aromatic vinyl compound and free of any ion-conducting group (hereinafter simply referred to as "polymer block ($A_0$)") of a block copolymer ($Z_0$) containing the polymer block ($A_0$) and the polymer block (B).
The number-average molecular weight (Mn) of the block copolymer ($Z_0$) is not particularly limited, and typically falls within the range of preferably from 10,000 to 300,000, more preferably from 15,000 to 250,000, still more preferably from 40,000 to 200,000, particularly preferably from 70,000 to 180,000 as a value in terms of standard polystyrene, measured by a gel permeation chromatography (GPC) method. When the Mn of the block copolymer ($Z_0$) is 70,000 or more, its tensile breaking elongation performance is high, and when the Mn is 180,000 or less, its membrane formability is high.
The ion exchange capacity of the block copolymer (Z) falls within the range of preferably from 0.4 to 4.5 meq/g, more preferably from 0.8 to 3.2 meq/g, still more preferably from 1.3 to 3.0 meq/g, particularly preferably from 1.8 to 2.8 meq/g. When the ion exchange capacity is 0.4 meq/g or more, the ion conductivity is good, and when the ion exchange capacity is 4.5 meq/g or less, the copolymer hardly swells. The ion exchange capacity of the block copolymer (Z) can be calculated by employing an acid value titration method.
In addition, the block copolymer (Z) may have one polymer block (A) and/or one polymer block (B), or may have a plurality of polymer blocks (A) and/or a plurality of polymer blocks (B). When the copolymer has the plurality of polymer blocks (A), the structures of the blocks (such as the kind of a structural unit, a polymerization degree, and the kind and introduction ratio of an ion-conducting group) may be identical to or different from each other. In addition, when

the copolymer has the plurality of polymer blocks (B), the structures of the blocks (such as the kind of a structural unit and a polymerization degree) may be identical to or different from each other.

The sequence of the polymer block (A) and polymer block (B) in the block copolymer (Z) is not particularly limited. The respective polymer blocks may be linearly bonded or may be bonded in a branched manner. That is, the block copolymer (Z) to be used in the present invention comprehends a graft copolymer.

Examples of the sequence of the polymer block (A) and polymer block (B) in the block copolymer (Z) include an A-B type diblock copolymer (A and B represent the polymer block (A) and the polymer block (B), respectively, and the same applies to the following sequences), an A-B-A-type triblock copolymer, a B-A-B-type triblock copolymer, an A-B-A-B-type tetrablock copolymer, an A-B-A-B-A-type pentablock copolymer, a B-A-B-A-B-type pentablock copolymer, an $(A-B)_nD$-type star copolymer (D represents a coupling agent residue and n represents an integer of 2 or more, and the same applies to the following sequences), and a $(B-A)_nD$-type star copolymer. Among them, from the viewpoints of mechanical strength and ion conductivity, an A-B-A-type triblock copolymer, an A-B-A-B-A-type pentablock copolymer, or an $(A-B)_nD$-type star copolymer is preferred, and an A-B-A-type triblock copolymer is more preferred. In the polymer electrolyte membrane of the present invention, one kind of those block copolymers may be used alone, or two or more kinds thereof may be used in combination.

In the block copolymer (Zo), a mass ratio "(total amount of polymer block ($A_0$)):(total amount of polymer block (B))" falls within the range of preferably from 95:5 to 5:95, more preferably from 75:25 to 15:85, still more preferably from 65:35 to 20:80, particularly preferably from 45:55 to 25:75 from the viewpoints of the ion conductivity and the mechanical strength. When the mass ratio falls within the particularly preferred range, the polymer electrolyte membrane is particularly excellent in mechanical strength, and shows particularly good characteristics even in a start-stop durability test in which wetting (start) and drying (stop) are repeated in a fuel cell.

<Polymer Block (A)>

The polymer block (A) can be formed by introducing an ion-conducting group into the polymer block ($A_0$). The ion-conducting group is typically introduced into an aromatic ring of the polymer block ($A_0$).

The polymer block ($A_0$) contains a structural unit derived from an aromatic vinyl compound, and an aromatic ring of such aromatic vinyl compound is preferably a carbocyclic ring type aromatic ring such as a benzene ring, a naphthalene ring, an anthracene ring, or a pyrene ring, more preferably a benzene ring.

Examples of the aromatic vinyl compound that may form the polymer block ($A_0$) include styrene, 2-methylstyrene, 3-methylstyrene, 4-methylstyrene, 4-ethylstyrene, 2,3-dimethylstyrene, 2,4-dimethylstyrene, 2,5-dimethylstyrene, 3,5-dimethylstyrene, 2-methoxystyrene, 3-methoxystyrene, 4-methoxystyrene, vinylbiphenyl, vinylterphenyl, vinylnaphthalene, vinylanthracene, and 4-phenoxystyrene.

In addition, a hydrogen atom bonded to carbon at an α-position (α-carbon) of an aromatic ring among the hydrogen atoms of the vinyl groups of the aromatic vinyl compounds may be substituted with any other substituent. Examples of such substituent include: an alkyl group having 1 to 4 carbon atoms such as a methyl group, an ethyl group, a n-propyl group, an isopropyl group, a n-butyl group, an isobutyl group, a sec-butyl group, or a tert-butyl group; a halogenated alkyl group having 1 to 4 carbon atoms such as a chloromethyl group, a 2-chloroethyl group, or a 3-chloroethyl group; and a phenyl group. Examples of the aromatic vinyl compound in which the hydrogen atom bonded to the α-carbon is substituted with any one of those substituents include α-methylstyrene, α-methyl-4-methylstyrene, α-methyl-2-methylstyrene, α-methyl-4-ethylstyrene, and 1,1-diphenylethylene.

Among the aromatic vinyl compounds that may form the polymer block ($A_0$), an aromatic vinyl compound selected from the following compounds is preferred: styrene, α-methylstyrene, 4-methylstyrene, 4-ethylstyrene, α-methyl-4-methylstyrene, α-methyl-2-methylstyrene, vinylbiphenyl, and 1,1-diphenylethylene. An aromatic vinyl compound selected from the following compounds is more preferred: styrene, α-methylstyrene, 4-methylstyrene, and 1,1-diphenylethylene. Styrene or α-methylstyrene is still more preferred.

The polymer block ($A_0$) can be formed by polymerizing one kind of those aromatic vinyl compounds alone as a monomer, or by polymerizing two or more kinds thereof in combination as monomers. A copolymerization form in the case where two or more kinds of the aromatic vinyl compounds are used in combination is preferably random copolymerization.

In the present invention, the polymer block ($A_0$) may contain one or two or more kinds of other structural units that are not derived from any aromatic vinyl compound to the extent that the effect of the present invention is not impaired. As a monomer that may form such other structural unit, there are given, for example: a conjugated diene having 4 to 8 carbon atoms such as butadiene, 1,3-pentadiene, isoprene, 1,3-hexadiene, 2,3-dimethyl-1,3-butadiene, 2-ethyl-1,3-butadiene, or 1,3-heptadiene; an alkene having 2 to 8 carbon atoms such as ethylene, propylene, 1-butene, isobutene, 1-pentene, 1-hexene, 1-heptene, or 1-octene; a (meth)acrylic acid ester such as methyl (meth)acrylate, ethyl (meth)acrylate, or butyl (meth)acrylate; a vinyl ester such as vinyl acetate, vinyl propionate, vinyl butyrate, or vinyl pivalate; and a vinyl ether such as methyl vinyl ether or isobutyl vinyl ether. In this case, the form of the copolymerization of such other

monomer and the aromatic vinyl compound is preferably random copolymerization. The usage of such other monomer is preferably 5 mol% or less of the monomers to be used in the formation of the polymer block ($A_0$).

A number-average molecular weight (Mn) per one polymer block ($A_0$) falls within the range of preferably from 1,000 to 100,000, more preferably from 2,000 to 70,000, still more preferably from 4,000 to 50,000, particularly preferably from 6,000 to 30,000 as a value in terms of standard polystyrene. When the number-average molecular weight (Mn) is 6,000 or more, the ion conductivity becomes good. When the number-average molecular weight (Mn) is 30,000 or less, the hot water resistance of the polymer electrolyte membrane becomes good, and such number-average molecular weight is advantageous in terms of production because the membrane formability of the block copolymer (Z) becomes good.

The ion-conducting group of the polymer block ($A_0$) is preferably a proton-conducting group, more preferably one or more kinds selected from a sulfonic acid group represented by $-SO_3M$ and a phosphonic acid group represented by $-PO_3HM$ (where M represents a hydrogen atom, an ammonium ion, or an alkali metal ion), and salts thereof, still more preferably a sulfonic acid group.

<Polymer Block (B)>

The polymer block (B) is an amorphous polymer block containing a structural unit derived from an unsaturated aliphatic hydrocarbon and free of any ion-conducting group. It should be noted that the amorphous property of the polymer block (B) can be confirmed by the fact that when the dynamic viscoelasticity of the block copolymer (Z) is measured, a change in storage modulus derived from a crystalline olefin polymer is absent.

Examples of the unsaturated aliphatic hydrocarbon that may form the polymer block (B) include: an alkene having 2 to 8 carbon atoms such as ethylene, propylene, 1-butene, isobutene, 1-pentene, 1-hexene, 1-heptene, or 1-octene; a vinylcycloalkane having 7 to 10 carbon atoms such as vinylcyclopentane, vinylcyclohexane, vinylcycloheptane, or vinylcyclooctane; a vinylcycloalkene having 7 to 10 carbon atoms such as vinylcyclopentene, vinylcyclohexene, vinylcycloheptene, or vinylcyclooctene; a conjugated diene having 4 to 8 carbon atoms such as butadiene, 1,3-pentadiene, isoprene, 1,3-hexadiene, 2,3-dimethyl-1,3-butadiene, 2-ethyl-1,3-butadiene, or 1,3-heptadiene; and a conjugated cycloalkadiene having 5 to 8 carbon atoms such as cyclopentadiene or 1,3-cyclohexadiene. Among them, an unsaturated aliphatic hydrocarbon selected from the following hydrocarbons is preferred: an alkene having 2 to 8 carbon atoms such as ethylene, propylene, 1-butene, isobutene, 1-pentene, 1-hexene, 1-heptene, or 1-octene; and a conjugated diene having 4 to 8 carbon atoms such as butadiene, 1,3-pentadiene, isoprene, 1,3-hexadiene, 2,3-dimethyl-1,3-butadiene, 2-ethyl-1,3-butadiene, or 1,3-heptadiene. A conjugated diene having 4 to 8 carbon atoms is more preferred. An unsaturated aliphatic hydrocarbon selected from isobutene, butadiene, and isoprene is still more preferred. An unsaturated aliphatic hydrocarbon selected from butadiene and isoprene is particularly preferred. The polymer block (B) is formed by polymerizing one kind of those unsaturated aliphatic hydrocarbons alone as a monomer, or by polymerizing two or more kinds thereof in combination as monomers. A copolymerization form in the case where two or more kinds of the unsaturated aliphatic hydrocarbons are used in combination is preferably random copolymerization.

In addition, the polymer block (B) may contain any other structural unit that is not derived from any unsaturated aliphatic hydrocarbon to the extent that the effect of the polymer block (B) by which flexibility is imparted to the block copolymer (Z) in a use temperature region is not impaired. As a monomer that may form such other structural unit, there are given, for example: an aromatic vinyl compound such as styrene or vinylnaphthalene; a halogen-containing vinyl compound such as vinyl chloride; a vinyl ester such as vinyl acetate, vinyl propionate, vinyl butyrate, or vinyl pivalate; and a vinyl ether such as methyl vinyl ether or isobutyl vinyl ether. In this case, the form of the copolymerization of such other monomer and the unsaturated aliphatic hydrocarbon is preferably random copolymerization. The usage of such other monomer is preferably 5 mol% or less of the monomers to be used in the formation of the polymer block (B).

When the unsaturated aliphatic hydrocarbon has a plurality of carbon-carbon double bonds, any one of the bonds may be used in the polymerization. In the case of, for example, a conjugated diene, any one of a 1,2-bond unit and a 1,4-bond unit is permitted. Although a carbon-carbon double bond typically remains in a polymer block formed by polymerizing the conjugated diene, hydrogen is preferably added to such carbon-carbon double bond (hereinafter referred to as "hydrogenation") by performing a hydrogen-adding reaction (hereinafter referred to as "hydrogenation reaction") after the polymerization of the block copolymer ($Z_0$) from the viewpoint of, for example, an improvement in heat deterioration resistance. The hydrogen addition ratio (hereinafter referred to as "hydrogenation ratio") of such carbon-carbon double bond is preferably 30 mol% or more, more preferably 50 mol% or more, still more preferably 95 mol% or more. The deterioration of the polymer electrolyte membrane can be suppressed by reducing the amount of the carbon-carbon double bonds in the polymer block (B) as described above.

In addition, when the block copolymer (Z) is produced by introducing the ion-conducting group after the polymerization of the block copolymer ($Z_0$), the polymer block (B) preferably has a saturated hydrocarbon structure because the introduction of the ion-conducting group into the polymer block (B) hardly occurs. Therefore, when the hydrogenation reaction of a carbon-carbon double bond remaining in the polymer block (B) after the polymerization of the block copolymer

($Z_0$) is performed, the reaction is desirably performed before the introduction of the ion-conducting group.

It should be noted that the hydrogenation ratio of a carbon-carbon double bond can be calculated by $^1$H-NMR measurement.

A number-average molecular weight (Mn) per one polymer block (B) typically falls within the range of preferably from 5,000 to 250,000, more preferably from 7,000 to 200,000, still more preferably from 15,000 to 150,000, particularly preferably from 80,000 to 140,000 as a value in terms of standard polystyrene. When the number-average molecular weight (Mn) is 80,000 or more, the mechanical strength becomes particularly good, and the polymer electrolyte membrane shows particularly good characteristics even in a start-stop durability test in which wetting (start) and drying (stop) are repeated in a fuel cell. When the number-average molecular weight (Mn) is 140,000 or less, the membrane formability of the block copolymer (Z) becomes good and hence such number-average molecular weight is advantageous in terms of production.

<Other Polymer Block (C)>

The block copolymer (Z) may further contain a polymer block (C) containing a structural unit derived from an aromatic vinyl compound and free of any ion-conducting group. In the polymer electrolyte membrane of the present invention, the polymer block (C) forms a microphase-separated structure with the polymer block (A) and the polymer block (B).

The polymer block (C) preferably contains a structural unit derived from an aromatic vinyl compound represented by the following general formula (1) from the viewpoint of superiority in terms of production.

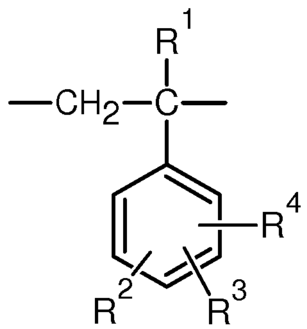

**(1)**

(In the formula, $R^1$ represents a hydrogen atom or an alkyl group having 1 to 4 carbon atoms, $R^2$ represents an alkyl group having 3 to 8 carbon atoms, and $R^3$ and $R^4$ each independently represent a hydrogen atom or an alkyl group having 3 to 8 carbon atoms.)

When the polymer block (C) is a structural unit derived from an aromatic vinyl compound having at least one alkyl group having 3 to 8 carbon atoms on an aromatic ring, the ion-conducting group can be selectively introduced into the polymer block ($A_0$) upon production of the polymer block (Z) through the introduction of the ion-conducting group after the production of the block copolymer ($Z_0$) containing the polymer block ($A_0$), the polymer block (B), and the polymer block (C) as described later.

Examples of the aromatic vinyl compound for forming the structural unit represented by the general formula (1) include 4-propylstyrene, 4-isopropylstyrene, 4-butylstyrene, 4-isobutylstyrene, 4-tert-butylstyrene, 4-octylstyrene, α-methyl-4-tert-butylstyrene, and α-methyl-4-isopropylstyrene. Among them, 4-tert-butylstyrene, 4-isopropylstyrene, α-methyl-4-tert-butylstyrene, or α-methyl-isopropylstyrene is more preferred. 4-tert-Butylstyrene is still more preferred. One kind of those compounds may be used alone, or two or more kinds thereof may be used in combination. A copolymerization form in the case where the polymer block (C) is formed by using two or more kinds thereof in combination is preferably random copolymerization.

The polymer block (C) may contain one or two or more kinds of other structural units that are not derived from any aromatic vinyl compound to the extent that the effect of the present invention is not impaired. As a monomer that may form such other structural unit, there are given, for example: a conjugated diene having 4 to 8 carbon atoms such as butadiene, 1,3-pentadiene, isoprene, 1,3-hexadiene, 2,4-hexadiene, 2,3-dimethyl-1,3-butadiene, 2-ethyl-1,3-butadiene, or 1,3-heptadiene; an alkene having 2 to 8 carbon atoms such as ethylene, propylene, 1-butene, isobutene, 1-pentene, 1-hexene, 1-heptene, or 1-octene; a (meth)acrylic acid ester such as methyl (meth)acrylate, ethyl (meth)acrylate, or butyl (meth)acrylate; a vinyl ester such as vinyl acetate, vinyl propionate, vinyl butyrate, or vinyl pivalate; and a vinyl ether such as methyl vinyl ether or isobutyl vinyl ether. In this case, the form of the copolymerization of such other monomer and the aromatic vinyl compound is preferably random copolymerization. The usage of such other monomer is preferably 5 mol% or less of the monomers to be used in the formation of the polymer block (C).

A number-average molecular weight (Mn) per one polymer block (C) typically falls within the range of preferably from 1,000 to 50,000, more preferably from 1,500 to 30,000, still more preferably from 2,000 to 20,000 as a value in terms of standard polystyrene. When such molecular weight is 1,000 or more, the mechanical strength of the polymer electrolyte membrane tends to be excellent, and when the molecular weight is 50,000 or less, the moldability and membrane formability of a polymer electrolyte become good.

As a sequence in the case where the block copolymer (Z) to be used in the present invention contains the polymer block (C), there are given, for example, an A-B-C type triblock copolymer (A, B, and C represent the polymer block (A), the polymer block (B), and the polymer block (C), respectively, and the same applies to the following copolymers), an A-B-C-A type tetrablock copolymer, an A-B-A-C type tetrablock copolymer, a B-A-B-C type tetrablock copolymer, an A-B-C-B type tetrablock copolymer, an A-C-B-C type tetrablock copolymer, a C-A-B-A-C type pentablock copolymer, a C-B-A-B-C type pentablock copolymer, an A-C-B-C-A type pentablock copolymer, an A-C-B-A-C type pentablock copolymer, an A-C-B-C-A-C type hexablock copolymer, a C-A-B-C-A-C type hexablock copolymer, an A-C-A-C-B-C type hexablock copolymer, an A-C-A-C-B-C-A type heptablock copolymer, an A-C-B-C-B-C-A type heptablock copolymer, a C-A-C-B-C-A-C type heptablock copolymer, an A-C-A-C-B-C-A-C type octablock copolymer, an A-C-B-C-B-C-A-C type octablock copolymer, and an A-C-B-C-A-C-B-C type octablock copolymer. Among them, from the viewpoints of mechanical strength and ion conductivity, the following copolymer is preferred: an A-B-C type triblock copolymer, an A-B-C-A type tetrablock copolymer, an A-B-A-C type tetrablock copolymer, an A-C-B-C type tetrablock copolymer, a C-A-B-A-C type pentablock copolymer, a C-B-A-B-C type pentablock copolymer, an A-C-B-C-A type pentablock copolymer, an A-C-B-A-C type pentablock copolymer, an A-C-B-C-A-C type hexablock copolymer, a C-A-B-C-A-C type hexablock copolymer, an A-C-A-C-B-C type hexablock copolymer, an A-C-A-C-B-C-A type heptablock copolymer, an A-C-B-C-B-C-A type heptablock copolymer, a C-A-C-B-C-A-C type heptablock copolymer, an A-C-A-C-B-C-A-C type octablock copolymer, an A-C-B-C-B-C-A-C type octablock copolymer, or an A-C-B-C-A-C-B-C type octablock copolymer. The following copolymer is more preferred: an A-B-C type triblock copolymer, an A-B-C-A type tetrablock copolymer, an A-B-A-C type tetrablock copolymer, an A-C-B-C type tetrablock copolymer, an A-C-B-C-A type pentablock copolymer, an A-C-B-A-C type pentablock copolymer, an A-C-B-C-A-C type hexablock copolymer, an A-C-A-C-B-C type hexablock copolymer, an A-C-A-C-B-C-A type heptablock copolymer, an A-C-B-C-B-C-A type heptablock copolymer, an A-C-A-C-B-C-A-C type octablock copolymer, an A-C-B-C-B-C-A-C type octablock copolymer, or an A-C-B-C-A-C-B-C type octablock copolymer. The following copolymer is still more preferred: an A-C-B-C type tetrablock copolymer, an A-C-B-C-A type pentablock copolymer, an A-C-B-C-A-C type hexablock copolymer, or an A-C-A-C-B-C-A-C type octablock copolymer. An A-C-B-C-A type pentablock copolymer or an A-C-A-C-B-C-A-C type octablock copolymer is particularly preferred. An A-C-B-C-A type pentablock copolymer is most preferred. In the polymer electrolyte membrane of the present invention, one kind of those block copolymers may be used alone, or two or more kinds thereof may be used in combination.

When the block copolymer (Z) constituting the polymer electrolyte membrane of the present invention contains the polymer block (C), the ratio of the polymer block (C) to the block copolymer (Z) is preferably 50 % by weight or less, more preferably 40 % by weight or less, still more preferably 30 % by weight or less.

<Production of Block Copolymer ($Z_0$)>

The block copolymer (Z) constituting the polymer electrolyte membrane of the present invention can be produced by a method involving introducing the ion-conducting group into the polymer block ($A_0$) after the production of the block copolymer ($Z_0$) containing the polymer block ($A_0$) and the polymer block (B) through the polymerization of the respective monomers.

Although a method of producing the block copolymer ($Z_0$) can be appropriately selected, a method involving polymerizing the respective monomers by a polymerization method selected from a living radical polymerization method, a living anionic polymerization method, and a living cationic polymerization method is preferred.

With regard to specific examples of the method of producing the block copolymer (Zo), examples of the method of producing the block copolymer ($Z_0$) containing, as components, the polymer block ($A_0$) containing a structural unit derived from an aromatic vinyl compound and the polymer block (B) formed of a conjugated diene include:

(1) a method to provide an A-B-A type block copolymer by sequentially anionic polymerization of the aromatic vinyl compound, the conjugated diene, and the aromatic vinyl compound in a cyclohexane solvent with an anionic polymerization initiator under a temperature condition of from 20 to 100°C;

(2) a method involving sequentially subjecting the aromatic vinyl compound and the conjugated diene to anionic polymerization in a cyclohexane solvent with an anionic polymerization initiator under a temperature condition of from 20 to 100°C, and then adding a coupling agent such as phenyl benzoate to the resultant to provide an A-B-A type block copolymer; and

(3) a method involving subjecting the aromatic vinyl compound at a concentration of from 5 to 50 % by weight to anionic polymerization in a nonpolar solvent through the use of an organolithium compound as an initiator in the

presence of a polar compound at a concentration of from 0.1 to 10 % by weight at a temperature of from -30 to 30°C, subjecting the resultant living polymer to anionic polymerization with the conjugated diene, and then adding a coupling agent such as phenyl benzoate to the resultant to provide an A-B-A type block copolymer.

In addition, the method of producing the block copolymer ($Z_0$) containing, as components, the polymer block ($A_0$) containing a structural unit derived from an aromatic vinyl compound and the polymer block (B) formed of isobutene is, for example, (4) a method involving subjecting isobutene to cationic polymerization in a mixed solvent of halogen- and hydrocarbon-based solvents at -78°C with a bifunctional halide initiator in the presence of a Lewis acid, and then subjecting the resultant to cationic polymerization with the aromatic vinyl compound to provide an A-B-A type block copolymer.

It should be noted that the polymer block (C) can be added as a component for the block copolymer by changing or adding a component to be subjected to a reaction in the anionic polymerization or the cationic polymerization as required.

<Production of Block Copolymer (Z)>

Described below is the method involving introducing the ion-conducting group into the block copolymer ($Z_0$) to produce the block copolymer (Z).

First, a method of introducing a sulfonic acid group into the block copolymer ($Z_0$) is described. The introduction of the sulfonic acid group (sulfonation) can be performed by a known method. Examples thereof include: a method involving preparing an organic solvent solution or suspension of the block copolymer ($Z_0$), and adding and mixing a sulfonating agent to be described later in such solution or suspension; and a method involving directly adding a gaseous sulfonating agent to the block copolymer ($Z_0$).

Examples of the sulfonating agent include: sulfuric acid; a mixture system of sulfuric acid and an acid anhydride; chlorosulfonic acid; a mixture system of chlorosulfonic acid and trimethylsilyl chloride; sulfur trioxide; a mixture system of sulfur trioxide and triethyl phosphate; and an aromatic organic sulfonic acid typified by 2,4,6-trimethylbenzenesulfonic acid. Among them, a mixture system of sulfuric acid and an acid anhydride is preferred. In addition, examples of the organic solvent to be used may include: a halogenated hydrocarbon such as methylene chloride; a linear aliphatic hydrocarbon such as hexane; a cyclic aliphatic hydrocarbon such as cyclohexane; and an aromatic carbon having an electron-withdrawing group such as nitrobenzene.

Next, a method of introducing a phosphonic acid group into the block copolymer ($Z_0$) is described. The introduction of the phosphonic acid group (phosphonation) can be performed by a known method. Examples thereof include: a method involving causing an aromatic ring of the polymer block ($A_0$) to react with a halomethyl ether in the presence of aluminum chloride to introduce a halomethyl group, subsequently causing the resultant to react with phosphorus trichloride and aluminum chloride to substitute the group with a phosphorus derivative, and then performing hydrolysis to transform the derivative into the phosphonic acid group; and a method involving causing the aromatic ring of the aromatic vinyl compound to react with phosphorus trichloride and anhydrous aluminum chloride to introduce a phosphinic acid group, and oxidizing the group with nitric acid to transform the group into the phosphonic acid group.

The introduction ratio of the ion-conducting group with respect to the structural unit derived from the aromatic vinyl compound of the polymer block (A) in the block copolymer (Z) (e.g., a sulfonation ratio or a phosphonation ratio) can be calculated by employing $^1$H-NMR.

<Crosslinking Agent (X)>

The crosslinking agent (X) is a compound having, in a molecule thereof, two or more aromatic rings of which one or more hydrogen atoms are substituted with hydroxy groups. When the crosslinking agent (X) has the two or more aromatic rings in a molecule thereof, the crosslinking agent (X) is selectively present in a phase (a) containing the hydrophilic polymer block (A). It is assumed that as a result of the foregoing, a high crosslink density can be realized, and the hot water resistance of the polymer electrolyte membrane can be improved by crosslinking the hydrophilic polymer block (A).

The aromatic rings are each preferably a hydrocarbon-based aromatic ring such as a benzene ring, a naphthalene ring, or an anthracene ring, more preferably a benzene ring.

In addition, when the aromatic rings are each a benzene ring, one or more hydrogen atoms of the benzene ring are substituted with hydroxy groups. However, it is preferred that when carbon on the benzene ring having bonded thereto a hydroxy group is defined as a 1-position, at least one of the carbon atoms at 2, 4, and 6-positions do not have any substituent. The carbon at the 4-position among those atoms more preferably has a methyl group from the viewpoint of increasing the tensile breaking elongation and tensile breaking strength of the polymer electrolyte membrane.

Specific examples of the crosslinking agent (X) include: a compound having, in a molecule thereof, two aromatic rings such as bisphenol S, 4,4'-dihydroxybiphenyl-2,2'-disulfonic acid, 4,4'-dihydroxybiphenyl-3,3'-disulfonic acid, 2,2'-dihydroxybiphenyl-4,4'-disulfonic acid, 5,5'-methylenebis(2-hydroxybenzoic acid), 4,4'-isopropylidenebis(2,6-dichlorophenol), 4,4'-isopropylidenebis(2,6-dibromophenol), 4,4'-(9-fluorenylidene)diphenol, bis(2-hydroxyphenyl)methane, 2,2'-biphenol, 4,4'-biphenol, bis(4-hydroxyphenyl)methane, bisphenol A, 4,4'-hexafluoroisopropylidenediphenol, 2,2-bis(4-hydroxy-3-methylphenyl)propane, 1,1-bis(4-hydroxy-3-methylphenyl)ethane, 2,2'-methylenebis(6-tert-butyl-4-methylphenol), 2,2'-methylenebis(6-tert-butyl-4-ethylphenol), 2,2'-ethylidenebis(4,6-di-tert-butylphenol), 3,3'-ethylenedioxydiphenol, 1,4-bis(3-hydroxyphenoxy)benzene, 1,3-bis(4-hydroxyphenoxy)benzene, bis(4-hydroxy-3,5-dimethylphenyl)methane, bis(4-hydroxyphenyl)phenylmethane, hexestrol, dithranol, 1,1'-bi-2-naphthol, nordihydroguaiaretic acid, bis(3,4-dihydroxy-6-methylphenyl)phenylmethane, and 9-(4-hydroxybenzyl)-10-(4-hydroxyphenyl)anthracene; a compound having, in a molecule thereof, three aromatic rings such as 1,1,3-tris(2-methyl-4-hydroxy-5-tert-butylphenyl)butane, 2,6-bis(4-hydroxy-3,5-dimethylbenzyl)-4-methylphenol, 1,1,1-tris(4-hydroxyphenyl)ethane, tris(4-hydroxyphenyl)methane, bis(4-hydroxy-3-methylphenyl)-4-hydroxy-3-methoxyphenylmethane, 2,6-bis(2-hydroxy-5-methylbenzyl)-4-methylphenol, or 2,6-bis(2,4-dihydroxybenzyl)-4-methylphenol; a compound having, in a molecule thereof, four aromatic rings such as 1,1,2,2-tetrakis(4-hydroxyphenyl)ethane, $\alpha,\alpha,\alpha',\alpha'$-tetrakis(4-hydroxyphenyl)-p-xylene, 2,2-bis[4,4-bis(4-hydroxyphenyl)cyclohexyl]propane, C-methylcalix[4]resorcinarene, calix[4]arene, or 6,6'-bis(2-hydroxy-5-methylbenzyl)-4,4'-dimethyl-2,2'-methylenediphenol; a compound having, in a molecule thereof, six aromatic rings such as 2,2-bis[4-hydroxy-3,5-bis(2-hydroxy-5-methylbenzyl)phenyl]propane or calix[6]arene; and a polymer having a phenol backbone as a repeating unit such as poly-2-hydroxy-5-vinylbenzenesulfonic acid, poly-2-vinylphenol, poly-3-vinylphenol, or poly-4-vinylphenol.

Among them, a crosslinking agent selected from the following agents is preferred: 4,4'-isopropylidenebis(2,6-dichlorophenol), 4,4'-isopropylidenebis(2,6-dibromophenol), 4,4'-(9-fluorenylidene)diphenol, bis(2-hydroxyphenyl)methane, 2,2'-biphenol, 4,4'-biphenol, bis(4-hydroxyphenyl)methane, bisphenol A, 4,4'-hexafluoroisopropylidenediphenol, 2,2-bis(4-hydroxy-3-methylphenyl)propane, 1,1-bis(4-hydroxy-3-methylphenyl)ethane, 2,2'-methylenebis(6-tert-butyl-4-methylphenol), 2,2'-methylenebis(6-tert-butyl-4-ethylphenol), 2,2'-ethylidenebis(4,6-di-tert-butylphenol), 3,3'-ethylenedioxydiphenol, 1,4-bis(3-hydroxyphenoxy)benzene, 1,3-bis(4-hydroxyphenoxy)benzene, bis(4-hydroxy-3,5-dimethylphenyl)methane, bis(4-hydroxyphenyl)phenylmethane, hexestrol, dithranol, 1,1'-bi-2-naphthol, nordihydroguaiaretic acid, bis(3,4-dihydroxy-6-methylphenyl)phenylmethane, 9-(4-hydroxybenzyl)-10-(4-hydroxyphenyl)anthracene, 1,1,3-tris(2-methyl-4-hydroxy-5-tert-butylphenyl)butane, 2,6-bis(4-hydroxy-3,5-dimethylbenzyl)-4-methylphenol, 1,1,1-tris(4-hydroxyphenyl)ethane, tris(4-hydroxyphenyl)methane, bis(4-hydroxy-3-methylphenyl)-4-hydroxy-3-methoxyphenylmethane, 2,6-bis(2-hydroxy-5-methylbenzyl)-4-methylphenol, 2,6-bis(2,4-dihydroxybenzyl)-4-methylphenol, 1,1,2,2-tetrakis(4-hydroxyphenyl)ethane, $\alpha,\alpha,\alpha',\alpha'$-tetrakis(4-hydroxyphenyl)-p-xylene, 2,2-bis[4,4-bis(4-hydroxyphenyl)cyclohexyl]propane, C-methylcalix[4]resorcinarene, calix[4]arene, 6,6'-bis(2-hydroxy-5-methylbenzyl)-4,4'-dimethyl-2,2'-methylenediphenol, 2,2-bis[4-hydroxy-3,5-bis((2-hydroxy-5-methylbenzyl))phenyl]propane, calix[6]arene, poly-2-vinylphenol, poly-3-vinylphenol, and poly-4-vinylphenol. A crosslinking agent selected from the following agents is more preferred: 2,2'-biphenol, 4,4'-biphenol, bisphenol A, 3,3'-ethylenedioxydiphenol, 1,4-bis(3-hydroxyphenoxy)benzene, 1,3-bis(4-hydroxyphenoxy)benzene, 2,6-bis(2-hydroxy-5-methylbenzyl)-4-methylphenol, 2,6-bis(2,4-dihydroxybenzyl)-4-methylphenol, 6,6'-bis(2-hydroxy-5-methylbenzyl)-4,4'-dimethyl-2,2'-methylenediphenol, poly-2-vinylphenol, poly-3-vinylphenol, and poly-4-vinylphenol. A crosslinking agent selected from the following agents is still more preferred: 2,2'-biphenol, 4,4'-biphenol, 3,3'-ethylenedioxydiphenol, 1,4-bis(3-hydroxyphenoxy)benzene, 1,3-bis((4-hydroxyphenoxy))benzene, 2,6-bis(2-hydroxy-5-methylbenzyl)-4-methylphenol, 2,6-bis(2,4-dihydroxybenzyl)-4-methylphenol, 6,6'-bis(2-hydroxy-5-methylbenzyl)-4,4'-dimethyl-2,2'-methylenediphenol, poly-2-vinylphenol, poly-3-vinylphenol, and poly-4-vinylphenol. From the viewpoint of high hot water resistance of a partial structure derived from the crosslinking agent (X), a crosslinking agent selected from the following agents is particularly preferred: 2,2'-biphenol, 4,4'-biphenol, 1,4-bis(3-hydroxyphenoxy)benzene, 1,3-bis(4-hydroxyphenoxy)benzene, 2,6-bis(2-hydroxy-5-methylbenzyl)-4-methylphenol, 2,6-bis(2,4-dihydroxybenzyl)-4-methylphenol, 6,6'-bis(2-hydroxy-5-methylbenzyl)-4,4'-dimethyl-2,2'-methylenediphenol, poly-2-vinylphenol, poly-3-vinylphenol, and poly-4-vinylphenol. Poly-4-vinylphenol is most preferred from the viewpoint of suppressing a voltage reduction when a fuel cell having incorporated therein the polymer electrolyte membrane is operated. In addition, from the viewpoint of increasing the tensile breaking elongation and the tensile breaking strength, a crosslinking agent selected from the following agents is most preferred: 2,6-bis(2-hydroxy-5-methylbenzyl)-4-methylphenol, 2,6-bis(2,4-dihydroxybenzyl)-4-methylphenol, and 6,6'-bis(2-hydroxy-5-methylbenzyl)-4,4'-dimethyl-2,2'-methylenediphenol.

One kind of the crosslinking agents (X) may be used alone, or two or more kinds thereof may be used in combination. However, two or more kinds thereof are preferably used in combination from the viewpoint of increasing the tensile breaking elongation and the tensile breaking strength. When two or more kinds of the crosslinking agents (X) are used in combination, the kinds are not particularly limited, but at least one kind of compound having, in a molecule thereof, three or more aromatic rings one or more hydrogen atoms of each of which are substituted with hydroxy groups is preferably used, and two or more kinds of such compounds are more preferably used. The combined use of poly-4-vinylphenol and 2,6-bis(2-hydroxy-5-methylbenzyl)-4-methylphenol or the combined use of poly-4-vinylphenol and 2,6-bis(2,4-dihydroxybenzyl)-4-methylphenol is preferred as specific combined use of the crosslinking agents (X). The usage of the crosslinking agent (X) falls within the range of preferably from 0.01 to 25 parts by mass, more preferably from 0.2

to 20 parts by mass, still more preferably from 0.3 to 15 parts by mass, particularly preferably from 1.0 to 12 parts by mass with respect to 100 parts by mass of the block copolymer (Z) from the viewpoint of improving the hot water resistance and ion conductivity of the polymer electrolyte membrane. In addition, the number of moles of the aromatic rings one or more hydrogen atoms of each of which are substituted with hydroxy groups of the crosslinking agent (X) falls within the range of preferably from 0.1 to 70 parts by mol, more preferably from 0.5 to 60 parts by mol, still more preferably from 0.8 to 50 parts by mol, particularly preferably from 3.0 to 38 parts by mol with respect to 100 parts by mol of the ion-conducting group of the block copolymer (Z) from the viewpoint of improving the hot water resistance and the ion conductivity, and from the viewpoint that the crosslink density is easily set to fall within a preferred range.

<Production of Polymer electrolyte Membrane>

Next, the production of the polymer electrolyte membrane of the present invention is described. The polymer electrolyte membrane is typically obtained by: preparing a fluid composition containing the block copolymer (Z) as a polymer electrolyte, the crosslinking agent (X), and a solvent; forming the fluid composition into a membrane on a substrate; and then crosslinking the membrane.

The fluid composition is prepared by dissolving or dispersing the block copolymer (Z) and the crosslinking agent (X) in the solvent. As required, any of the following various additives may be dissolved or dispersed together with the block copolymer (Z) and the crosslinking agent (X) to the extent that the effect of the present invention is not impaired: a softening agent, various stabilizers such as a phenol-based stabilizer, a sulfur-based stabilizer, and a phosphorus-based stabilizer, an inorganic filler, a light stabilizer, an antistatic agent, a release agent, a flame retardant, a foaming agent, a pigment, a dye, a bleach, carbon fiber, and the like. The content of the block copolymer (Z) in the components (solid matter) except the solvent in the fluid composition is preferably 50 % by weight or more, more preferably 70 % by weight or more, still more preferably 85 % by weight or more from the viewpoint of the ion conductivity of the polymer electrolyte membrane to be obtained.

Examples of the softening agent that can be used in the fluid composition include: petroleum-based softening agents such as paraffin-, naphthene-, and aroma-based process oils; paraffins; plant oil-based softening agents; and plasticizers. One kind of those softening agents may be used alone, or two or more kinds thereof may be used in combination.

Examples of the stabilizer that can be used in the fluid composition include: phenol-based stabilizers such as 2,6-di-tert-butyl-p-cresol, pentaerythrityl-tetrakis[3-(3,5-di-tert-butyl-4-hydroxyphenyl)propionate], 1,3,5-trimethyl-2,4,6-tris(3,5-di-tert-butyl-4-hydroxybenzyl)benzene, octadecyl-3-(3,5-di-tert-butyl-4-hydroxyphenyl)propionate, triethylene glycol-bis[3-(3-tert-butyl-4-hydroxyphenyl)propionate], 2,4-bis-(n-octylthio)-6-(4-hydroxy-3,5-di-tert-butylanilino)-1,3,5-triazine, 2,2-thio-diethylene bis[3-(3,5-di-tert-butyl-4-hydroxyphenyl)propionate], N,N'-hexamethylenebis(3,5-di-tert-butyl-4-hydroxy-hydrocinnamamide), 3,5-di-tert-butyl-4-hydroxy-benzyl phosphonate-diethyl ester, tris-(3,5-di-tert-butyl-4-hydroxybenzyl)-isocyanurate, and 3,9-bis[2-[3-(3-tert-butyl-4-hydroxy-5-methylphenyl)propionyloxy]-1,1-dimethylethyl]-2,4,8,10-tetraoxaspiro[5.5]undecane; sulfur-based stabilizers such as pentaerythrityl tetrakis(3-laurylthiopropionate), distearyl 3,3'-thiodipropionate, dilauryl 3,3'-thiodipropionate, and dimyristyl 3,3'-thiodipropionate; and phosphorus-based stabilizers such as tris(nonylphenyl) phosphite, tris(2,4-di-tert-butylphenyl) phosphite, and distearylpentaerythritol diphosphite. One kind of those stabilizers may be used alone, or two or more kinds thereof may be used in combination.

Examples of the inorganic filler that can be used in the fluid composition include talc, calcium carbonate, silica, glass fiber, mica, kaolin, titanium oxide, montmorillonite, and alumina. One kind of those fillers may be used alone, or two or more kinds thereof may be used in combination.

The solvent that can be used in the fluid composition only needs to be a solvent that does not destroy the structure of the block copolymer (Z), and specific examples thereof include: halogenated hydrocarbons such as methylene chloride; aromatic hydrocarbons such as toluene, xylene, and benzene; linear aliphatic hydrocarbons such as hexane, heptane, and octane; cyclic aliphatic hydrocarbons such as cyclohexane; ethers such as tetrahydrofuran; and alcohols such as methanol, ethanol, propanol, isopropyl alcohol, butanol, and isobutyl alcohol. One kind of those solvents may be used alone, or two or more kinds thereof may be used in combination, but a mixed solvent is preferably used from the viewpoint of the solubility or dispersibility of each polymer block incorporated into the block copolymer (Z). Examples of the mixed solvent as a preferred combination include a mixed solvent of toluene and isobutyl alcohol, a mixed solvent of xylene and isobutyl alcohol, a mixed solvent of toluene and isopropyl alcohol, a mixed solvent of cyclohexane and isopropyl alcohol, a mixed solvent of cyclohexane and isobutyl alcohol, a tetrahydrofuran solvent, a mixed solvent of tetrahydrofuran and methanol, a mixed solvent of toluene, isobutyl alcohol, and octane, and a mixed solvent of toluene, isopropyl alcohol, and octane. The following mixed solvent is more preferred: a mixed solvent of toluene and isobutyl alcohol, a mixed solvent of xylene and isobutyl alcohol, a mixed solvent of toluene and isopropyl alcohol, a mixed solvent of toluene, isobutyl alcohol, and octane, or a mixed solvent of toluene, isopropyl alcohol, and octane.

The fluid composition is typically formed into a membrane on a smooth substrate formed of, for example, polyethylene terephthalate (PET) or glass. A method for the membrane formation is, for example, a method involving

applying the composition with a coater, an applicator, or the like.

In addition, the fluid composition may be formed into a membrane on a substrate that is porous (porous substrate). In this case, the porous substrate is typically impregnated with at least part of the fluid composition. The porous substrate impregnated with at least part of the fluid composition functions as a reinforcing material by constituting part of the polymer electrolyte membrane after the crosslinking. A fibrous base material such as a woven fabric or a nonwoven fabric, a film-shaped base material having a fine through-hole, or the like can be used as the porous substrate. The film-shaped base material is, for example, a pore-filling membrane for a fuel cell. Among them, a fibrous base material is preferred from the viewpoint of strength. As fiber for forming the fibrous base material, there are given, for example, aramid fiber, glass fiber, cellulose fiber, nylon fiber, vinylon fiber, polyester fiber, polyolefin fiber, and rayon fiber. Among them, wholly aromatic polyester fiber or aramid fiber is more preferred from the viewpoint of strength.

A method of forming the fluid composition into a membrane on the porous substrate is, for example, a method involving laminating and applying the composition onto the base material by means of a dip-nip method, a coater, an applicator, or the like.

After the fluid composition has been formed into a membrane on the substrate as described above, the solvent is removed. The temperature at which the solvent is removed can be arbitrarily selected to the extent that the block copolymer (Z) does not decompose, and a plurality of temperatures may be arbitrarily combined. The removal of the solvent can be performed under, for example, a ventilated condition or a vacuum condition, and these conditions may be arbitrarily combined. Examples of a method of removing the solvent include: a method involving drying the membrane in a hot air dryer at from 60 to 120°C for 4 minutes or more to remove the solvent; a method involving drying the membrane in a hot air dryer at from 120 to 140°C for from 2 to 4 minutes to remove the solvent; a method involving preliminarily drying the membrane at 25°C for from 1 to 3 hours, and then drying the membrane in a hot air dryer at from 80 to 120°C for from 5 to 10 minutes; and a method involving preliminarily drying the membrane at 25°C for from 1 to 3 hours, and then drying the membrane under an atmosphere at from 25 to 40°C and under a reduced pressure condition for from 1 to 12 hours.

From the viewpoint that a polymer electrolyte membrane having good toughness is easily prepared, for example, the following methods are each suitably employed as the method of removing the solvent: a method involving drying the membrane in a hot air dryer at from 60 to 120°C for 4 minutes or more; a method involving preliminarily drying the membrane at 25°C for from 1 to 3 hours, and then drying the membrane in a hot air dryer at from about 80 to 120°C for from 5 to 10 minutes; and a method involving preliminarily drying the membrane at 25°C for from 1 to 3 hours, and then drying the membrane under an atmosphere at from 25 to 40°C and under a reduced pressure condition of 1.3 kPa or less for from 1 to 12 hours.

When the polymer electrolyte membrane is a multilayer membrane, for example, the following is adopted. After the fluid composition has been formed into a membrane on the substrate, a first layer is formed by removing the solvent. Then, a fluid composition containing another polymer electrolyte is further formed into a membrane on the membrane, and a second layer is formed by removing a solvent. Third and subsequent layers may be similarly formed. In addition, the multilayer membrane may be produced by laminating separately produced polymer electrolyte membranes.

The polymer electrolyte membrane of the present invention can be formed by forming the fluid composition into a membrane on the substrate and then crosslinking the membrane. A method involving heating the membrane or a method involving irradiating the membrane with an energy ray such as an electron beam can be adopted as a method for the crosslinking. In addition, the crosslinking may be performed simultaneously with the removal of the solvent or may be performed after the removal of the solvent, or the following may be adopted: after the solvent has been removed while the crosslinking has been performed, the crosslinking is further performed.

When the crosslinking is performed by heating, the temperature at which the membrane is heated is preferably from 50 to 250°C, more preferably from 60 to 200°C, still more preferably from 70 to 180°C, particularly preferably from 100 to 150°C. The time period for which the membrane is heated is preferably from 0.1 to 400 hours, more preferably from 0.2 to 200 hours, still more preferably from 0.4 to 100 hours.

When the crosslinking is performed with an electron beam, it is preferred that an acceleration voltage be set to fall within the range of from 50 to 250 kV and a dose be set to fall within the range of from 100 to 800 kGy.

It should be noted that a state where the block copolymer (Z) is crosslinked with the crosslinking agent (X) can be confirmed by, for example, an improvement in hot water resistance, increase in gel fraction, or increase in crosslink density to be described later.

The gel fraction of the polymer electrolyte membrane can be measured by a method to be described later, and is preferably 1% or more, more preferably 20% or more, still more preferably 50% or more, particularly preferably 80% or more. When the gel fraction is 80 mol% or more, the hot water resistance tends to be particularly good.

The crosslink density of the polymer electrolyte membrane can be calculated by a method to be described later, and falls within the range of preferably from $0.1\times10^{-5}$ to $100\times10^{-5}$ mol/ml, more preferably from $0.5\times10^{5}$ to $50\times10^{-5}$ mol/ml, still more preferably from $1\times10^{-5}$ to $40\times10^{-5}$ mol/ml, particularly preferably from $2\times10^{-5}$ to $30\times10^{-5}$ mol/ml, most preferably from $3\times10^{-5}$ to $15\times10^{-5}$ mol/ml. When the crosslink density is $3\times10^{-5}$ mol/ml or more, the hot water

resistance tends to be good. When the crosslink density is $15\times10^{-5}$ mol/ml or less, the tensile breaking elongation performance of the polymer electrolyte membrane after the crosslinking tends to be particularly high, and its start-stop durability also tends to be particularly good.

When the polymer electrolyte membrane is formed on a smooth substrate formed of, for example, polyethylene terephthalate (PET) or glass, the polymer electrolyte membrane is typically peeled from the substrate. It should be noted that when the polymer electrolyte membrane is formed on a porous substrate and the porous substrate is used as part of the polymer electrolyte membrane, the peeling is unnecessary.

Examples

Hereinafter, the present invention is described more specifically by way of Examples and Comparative Examples, but the present invention is not limited to Examples below.

(Measurement of Ion Exchange Capacity of Block Copolymer (Z))

The polymer electrolyte was weighed (weight: a (g)) in a glass container capable of sealing a sample, an excess amount of a saturated aqueous solution of sodium chloride ((300 to 500)×a (ml)) was added to the container, and the mixture was stirred for 12 hours. Hydrogen chloride produced in water was titrated with a 0.01 N NaOH standard aqueous solution (factor: f) (titer: b (ml)) by using phenolphthalein as an indicator.

The ion exchange capacity was determined from the following equation.

$$\text{Ion exchange capacity (meq/g)} = (0.01\times b\times f)/a$$

(Measurement of Number-average Molecular Weight (Mn) of Block Copolymer ($Z_0$))

The Mn was measured by a gel permeation chromatography (GPC) method under the following conditions, and was calculated in terms of standard polystyrene.

Apparatus: manufactured by Tosoh Corporation, trade name: HLC-8220GPC
Eluent: THF
Column: manufactured by Tosoh Corporation, trade name: TSK-GEL (one of TSKgel G3000HxL (76 mmI. D.×30 cm) and two of TSKgel Super Multipore HZ-M (46 mmI. D.×15 cm), i.e. a total of three columns are connected in series)
Column temperature: 40°C
Detector: RI
Liquid feed rate: 0.35 ml/min

(Measurement Conditions for $^1$H-NMR)

The contents of the respective structural units in the block copolymer ($Z_0$) obtained in each of Production Examples 1 to 18 to be described later, a 1,4-bond ratio and hydrogenation ratio in the polymer block (B), and the conversion ratio of α-methylstyrene during the polymerization of Production Example 10 were calculated from the results of $^1$H-NMR measurement under the following conditions.

Solvent: deuterochloroform
Measurement temperature: room temperature
Number of transients: 32

In addition, the sulfonation ratio of the block copolymer (Z) obtained in each of Production Examples 1 to 18 was calculated from the results of $^1$H-NMR measurement under the following conditions.

Solvent: mixed solvent of deuterotetrahydrofuran and deuteromethanol (mass ratio: 80/20)
Measurement temperature: 50°C
Number of transients: 32

In addition, the sulfonation ratio of sulfonated polyether ether ketone obtained in Production Example 19 was calculated from the results of $^1$H-NMR measurement under the following conditions.

Solvent: deuterodimethyl sulfoxide
Measurement temperature: 30°C
Number of transients: 32

(Measurement of Storage Modulus)

The storage modulus (E'), loss modulus (E"), and loss tangent (tanδ) of a polymer electrolyte membrane obtained in each of Examples and Comparative Examples were measured with a wide-area dynamic viscoelasticity-measuring apparatus ("DVE-V4FT RHEOSPECTRER" manufactured by Rheology) according to a tensile mode (frequency: 11 Hz) by increasing the temperature of the membrane from -80°C to 250°C at a rate of temperature increase of 3°C/min. The amorphous property of the polymer block (B) was judged on the basis of the fact that a change in storage modulus at from 80 to 100°C derived from a crystallized olefin polymer was absent. As a result, the polymer block (B) in each of all the block copolymers obtained in Examples and Comparative Examples was amorphous.

[Production Example 1]

(Production of Block Copolymer ($Z_0$-1))

461 Milliliters of dehydrated cyclohexane and 2.60 ml of sec-butyllithium (1.0 mol/L cyclohexane solution) were added to an autoclave having an internal volume of 1.4 L that had been purged with nitrogen after its drying. After that, while the mixture was stirred at 60°C, 19.8 ml of styrene, 135 ml of butadiene, and 19.8 ml of styrene were sequentially added and polymerized. Thus, polystyrene-b-polybutadiene-b-polystyrene was synthesized. The resultant block copolymer had a number-average molecular weight (Mn) of 76,000, a 1,4-bond amount of a polybutadiene block of 59.9%, and a content of a structural unit derived from styrene of 30.0 % by weight.

A solution of the block copolymer in cyclohexane was prepared and charged into a pressure-resistant container purged with nitrogen, and a hydrogenation reaction was performed with a Ni/Al-based Ziegler-type catalyst under a hydrogen pressure of from 0.5 to 1.0 MPa at 70°C for 15 hours. Thus, the block copolymer ($Z_0$) formed of a polystyrene polymer block (the polymer block ($A_0$)) and a hydrogenated polybutadiene polymer block (the polymer block (B)) [polystyrene-b-hydrogenated polybutadiene-b-polystyrene (hereinafter referred to as "block copolymer ($Z_0$-1)")] was obtained.

The hydrogenation ratio of the hydrogenated polybutadiene block of the resultant block copolymer ($Z_0$-1) was 99% or more.

(Production of Block Copolymer (Z-1))

195 Milliliters of acetic anhydride and 87.0 ml of sulfuric acid were mixed in 389 ml of methylene chloride at 0°C to prepare a sulfonating agent. Meanwhile, 100 g of the block copolymer ($Z_0$-1) were loaded into a 5-L reaction vessel made of glass provided with a stirring machine, and the following operation was repeated three times: the inside of the system was evacuated to a vacuum and nitrogen was introduced into the system. After that, 1,000 ml of methylene chloride were charged into the vessel in a state where nitrogen was introduced, and the copolymer was dissolved by stirring the mixture at normal temperature for 4 hours. After that, 610 ml of the sulfonating agent were dropped to the solution over 5 minutes. After the completion of the dropping, the mixture was stirred at normal temperature for 48 hours, and then 720 ml of distilled water were dropped to the mixture under stirring to terminate the reaction, and to solidify and precipitate solid matter.

Methylene chloride was removed by distillation at normal pressure and then the residue was filtered. The resultant solid matter was transferred to a beaker, 1.0 L of distilled water was added to the beaker, and the solid matter was washed under stirring. After that, the solid matter was recovered by filtration. Such washing and filtration were repeated until no change in pH of the washing water was observed, and then the recovered solid matter was dried at 1.3 kPa and 30°C for 24 hours. Thus, the block copolymer (Z) to be used in the polymer electrolyte membrane of the present invention was obtained (hereinafter referred to as "block copolymer (Z-1)"). The resultant block copolymer (Z-1) had a ratio of a sulfonic acid group with respect to a structural unit derived from styrene (sulfonation ratio) of 100 mol% and an ion exchange capacity of 2.3 meq/g.

[Production Example 2]

(Production of Block Copolymer ($Z_0$-2))

737 Milliliters of dehydrated cyclohexane and 2.06 ml of sec-butyllithium (0.70 mol/L cyclohexane solution) were added to an autoclave having an internal volume of 2 L that had been purged with nitrogen after its drying. After that, while the mixture was stirred at 60°C, 28.6 ml of styrene, 14.4 ml of 4-tert-butylstyrene, 28.6 ml of styrene, 14.4 ml of 4-tert-butylstyrene,114.9 ml of isoprene, 14.4 ml of 4-tert-butylstyrene, 28.6 ml of styrene, and 14.4 ml of 4-tert-butylstyrene were sequentially added and polymerized. Thus, polystyrene-b-poly(4-tert-butylstyrene)-b-polystyrene-b-poly(4-tert-butylstyrene)-b-polyisoprene-b-poly(4-tert-butylstyrene)-b-polystyrene-b-poly(4-tert-butylstyren e) was obtained. The resultant block copolymer had a Mn of 130,000, a 1,4-bond amount of a polyisoprene block of 93.7%, a content of a structural unit derived from styrene of 35.6 % by weight, and a content of a structural unit derived from 4-tert-butylstyrene of 24.8 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer ($Z_0$) formed of a polystyrene polymer block (the polymer block ($A_0$)) a hydrogenated polyisoprene polymer block (the polymer block (B)), and a poly(4-tert-butylstyrene) polymer block (the polymer block (C)) [polystyrene-b-poly(4-tert-butylstyrene)-b-polystyrene-b-poly(4-tert-butylstyrene)-b-hydrogenate d polyisoprene-b-poly(4-tert-butylstyrene)-b-polystyrene-b-poly(4-tert-butylstyrene) (hereinafter referred to as "block copolymer ($Z_0$-2)")] was obtained.

The hydrogenation ratio of the hydrogenated polyisoprene block of the resultant block copolymer ($Z_0$-2) was 99% or more.

(Production of Block Copolymer (Z-2))

270 Milliliters of methylene chloride and 149 ml of acetic anhydride were added to a three-necked flask having an internal volume of 1 L that had been purged with nitrogen after its drying, and 67 ml of concentrated sulfuric acid were dropped to the mixture while the mixture was stirred at 0°C. The mixture was further stirred at 0°C for 60 minutes to prepare a sulfonating agent. Meanwhile, 72 g of the block copolymer ($Z_0$-2) were loaded into a reaction vessel made of glass having an internal volume of 5 L and provided with a stirring machine, and the inside of the system was purged with nitrogen. After that, 1,600 ml of methylene chloride were charged into the vessel and the copolymer was dissolved by stirring the mixture at normal temperature for 4 hours. 486 Milliliters of the sulfonating agent prepared in advance were dropped to the solution over 5 minutes. The mixture was stirred at normal temperature for 48 hours and then 100 ml of distilled water were dropped to the mixture to terminate the reaction. While the mixture was stirred, 1,000 ml of distilled water were further gradually dropped to the mixture to precipitate solid matter. Methylene chloride was removed from the mixed liquid by distillation at normal pressure and then the residue was filtered. The recovered solid matter was transferred to a beaker, 1.0 L of distilled water was added to the beaker, and the solid matter was washed under stirring. After that, the solid matter was recovered again by filtration. The washing and filtration were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-2)"). The resultant block copolymer (Z-2) had a ratio of a sulfonic acid group with respect to a structural unit derived from styrene (sulfonation ratio) of 100 mol% and an ion exchange capacity of 2.6 meq/g.

[Production Example 3]

(Production of Block Copolymer ($Z_0$-3))

710 Milliliters of dehydrated cyclohexane, 1.95 ml of tetrahydrofuran, and 1.99 ml of sec-butyllithium (0.7 mol/L cyclohexane solution) were added to an autoclave having an internal volume of 1.4 L that had been purged with nitrogen after its drying. After that, while the mixture was stirred at 40°C, 21.6 ml of 4-methylstyrene, 140 ml of butadiene, and 21.6 ml of 4-methylstyrene were sequentially added and polymerized. Thus, poly(4-methylstyrene)-b-polybutadiene-b-poly(4-methylstyrene) was obtained. The resultant block copolymer had a Mn of 78,000, a 1,4-bond amount of a polybutadiene block calculated by $^1$H-NMR (400 MHz) of 58.5%, and a content of a structural unit derived from 4-methylstyrene of 30.0 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer ($Z_0$) formed of a poly(4-methylstyrene) polymer block (the polymer block ($A_0$)) and a hydrogenated polybutadiene polymer block (the polymer block (B)) [poly(4-methylstyrene)-b-hydrogenated polybutadiene-b-poly(4-methylstyrene) (hereinafter referred to as "block copolymer ($Z_0$-3)")] was obtained. The hydrogenation ratio of the hydrogenated polybutadiene block of the resultant block copolymer ($Z_0$-3) was 99% or more.

(Production of Block Copolymer (Z-3))

23.4 Milliliters of acetic anhydride and 10.5 ml of sulfuric acid were mixed in 35.1 ml of methylene chloride at 0°C to prepare a sulfonating agent. Meanwhile, 50 g of the block copolymer ($Z_0$-3) were loaded into a 3-L reaction vessel made of glass provided with a stirring machine, and the following operation was repeated three times: the inside of the

system was evacuated to a vacuum and nitrogen was introduced into the system. After that, 612 ml of methylene chloride were charged into the vessel in a state where nitrogen was introduced, and the copolymer was dissolved by stirring the mixture at normal temperature for 4 hours. After that, 69.1 ml of the sulfonating agent were dropped to the solution over 5 minutes. The mixture was stirred at normal temperature for 7 hours, and then 500 ml of distilled water were dropped to the mixture under stirring to terminate the reaction, and to precipitate solid matter. Methylene chloride was removed by distillation at normal pressure and then the residue was filtered. The recovered solid matter was transferred to a beaker, 1.0 L of distilled water was added to the beaker, and the solid matter was washed under stirring. After that, the solid matter was recovered again by filtration. Such washing and filtration were repeated until no change in pH of the washing water was observed, and then the recovered solid matter was dried at 1.3 kPa and 30°C for 24 hours. Thus, the block copolymer (Z) (hereinafter referred to as "block copolymer (Z-3)") was obtained. The resultant block copolymer (Z-3) had a ratio of a sulfonic acid group with respect to a structural unit derived from 4-methylstyrene (sulfonation ratio) of 65.2 mol% and an ion exchange capacity of 1.5 meq/g.

[Production Example 4]

(Production of Block Copolymer ($Z_0$-4))

626 Milliliters of dehydrated cyclohexane and 2.22 ml of sec-butyllithium (1.1 mol/L cyclohexane solution) were added to an autoclave having an internal volume of 1.4 L that had been purged with nitrogen after its drying. After that, while the mixture was stirred at 60°C, 10.9 ml of styrene, 68.0 ml of isoprene, and 10.9 ml of styrene were sequentially added and polymerized. Thus, polystyrene-b-polyisoprene-b-polystyrene was obtained. The resultant block copolymer had a Mn of 66,400, a 1,4-bond amount of a polyisoprene block calculated by $^1$H-NMR (400 MHz) of 94.0%, and a content of a structural unit derived from styrene of 30.0 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer ($Z_0$) formed of a polystyrene polymer block (the polymer block ($A_0$)) and a hydrogenated polyisoprene polymer block (the polymer block (B)) [polystyrene-b-hydrogenated polyisoprene-b-polystyrene (hereinafter referred to as "block copolymer ($Z_0$-4)")] was obtained. The hydrogenation ratio of the hydrogenated polyisoprene block of the resultant block copolymer ($Z_0$-4) was 99% or more.

(Production of Block Copolymer (Z-4))

39.2 Milliliters of acetic anhydride and 19.0 ml of sulfuric acid were mixed in 78.4 ml of methylene chloride at 0°C to prepare a sulfonating agent. Meanwhile, 30 g of the block copolymer ($Z_0$-4) were loaded into a 3-L reaction vessel made of glass provided with a stirring machine, and the following operation was repeated three times: the inside of the system was evacuated to a vacuum and nitrogen was introduced into the system. After that, 430 ml of methylene chloride were charged into the vessel in a state where nitrogen was introduced, and the copolymer was dissolved by stirring the mixture at normal temperature for 4 hours. After that, 136 ml of the sulfonating agent were dropped to the solution over 5 minutes. The mixture was stirred at normal temperature for 48 hours, and then 500 ml of distilled water were dropped to the mixture under stirring to terminate the reaction, and to precipitate solid matter. Methylene chloride was removed by distillation at normal pressure and then the residue was filtered. The recovered solid matter was transferred to a beaker, 1.0 L of distilled water was added to the beaker, and the solid matter was washed under stirring. After that, the solid matter was recovered again by filtration. Such washing and filtration were repeated until no change in pH of the washing water was observed, and then the recovered solid matter was dried at 1.3 kPa and 30°C for 24 hours. Thus, the block copolymer (Z) (hereinafter referred to as "block copolymer (Z-4)") was obtained. The resultant block copolymer (Z-4) had a ratio of a sulfonic acid group with respect to a structural unit derived from styrene (sulfonation ratio) of 98 mol% and an ion exchange capacity of 2.3 meq/g.

[Production Example 5]

(Production of Block Copolymer ($Z_0$-5))

626 Milliliters of dehydrated cyclohexane and 2.22 ml of sec-butyllithium (1.1 mol/L cyclohexane solution) were added to an autoclave having an internal volume of 1.4 L that had been purged with nitrogen after its drying. After that, while the mixture was stirred at 60°C, 10.9 ml of styrene, 70.8 ml of a mixture of butadiene and isoprene (molar ratio: 1:1), and 10.9 ml of styrene were sequentially added and polymerized. Thus, polystyrene-b-(polybutadiene-ran-polyisoprene)-b-polystyrene was obtained. The resultant block copolymer had a Mn of 92,000 and a content of a structural unit derived from styrene calculated by $^1$H-NMR (400 MHz) of 30.0 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer ($Z_0$) formed of a polystyrene polymer block (the polymer block ($A_0$)) and a hydrogenated (polybutadiene-ran-polyisoprene) polymer block (the polymer block (B)) [polystyrene-b-hydrogenated (polybutadiene-ran-polyisoprene)-b-polystyrene (hereinafter referred to as "block copolymer ($Z_0$-5)")] was obtained. The hydrogenation ratio of the hydrogenated (polybutadiene-ran-polyisoprene) block of the resultant block copolymer ($Z_0$-5) was 99% or more.

(Production of Block Copolymer (Z-5))

39.2 Milliliters of acetic anhydride and 19.0 ml of sulfuric acid were mixed in 78.4 ml of methylene chloride at 0°C to prepare a sulfonating agent. Meanwhile, 30 g of the block copolymer ($Z_0$-5) were loaded into a 3-L reaction vessel made of glass provided with a stirring machine, and the following operation was repeated three times: the inside of the system was evacuated to a vacuum and nitrogen was introduced into the system. After that, 430 ml of methylene chloride were charged into the vessel in a state where nitrogen was introduced, and the copolymer was dissolved by stirring the mixture at normal temperature for 4 hours. After that, 136 ml of the sulfonating agent were dropped to the solution over 5 minutes. The mixture was stirred at normal temperature for 48 hours, and then 500 ml of distilled water were dropped to the mixture under stirring to terminate the reaction, and to precipitate solid matter. Methylene chloride was removed by distillation at normal pressure and then the residue was filtered. The recovered solid matter was transferred to a beaker, 1.0 L of distilled water was added to the beaker, and the solid matter was washed under stirring. After that, the solid matter was recovered again by filtration. Such washing and filtration were repeated until no change in pH of the washing water was observed, and then the recovered solid matter was dried at 1.3 kPa and 30°C for 24 hours. Thus, the block copolymer (Z) (hereinafter referred to as "block copolymer (Z-5)") was obtained. The resultant block copolymer (Z-5) had a ratio of a sulfonic acid group with respect to a structural unit derived from styrene (sulfonation ratio) of 98 mol% and an ion exchange capacity of 2.3 meq/g.

[Production Example 6]

(Production of Block Copolymer ($Z_0$-6))

615 Milliliters of dehydrated cyclohexane and 1.33 ml of sec-butyllithium (0.90 mol/L cyclohexane solution) were added to an autoclave having an internal volume of 1.4 L that had been purged with nitrogen after its drying. After that, while the mixture was stirred at 60°C, 46.7 ml of styrene, 16.2 ml of 4-tert-butylstyrene, 69.2 ml of isoprene, and 16.2 ml of 4-tert-butylstyrene were sequentially added and polymerized. Thus, polystyrene-b-poly(4-tert-butylstyrene)-b-polyisoprene-b-poly(4-tert-butylstyrene) was obtained. The resultant block copolymer had a Mn of 149,000, a 1,4-bond amount of a polyisoprene block of 94.0%, a content of a structural unit derived from styrene of 34.4 % by weight, and a content of a structural unit derived from 4-tert-butylstyrene of 24.5 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer (Zo) formed of a polystyrene polymer block (the polymer block ($A_0$)), a hydrogenated polyisoprene polymer block (the polymer block (B)), and a poly(4-tert-butylstyrene) polymer block (the polymer block (C)) [polystyrene-b-poly(4-tert-butylstyrene)-b-hydrogenated polyisoprene-b-poly(4-tert-butylstyrene) (hereinafter referred to as "block copolymer ($Z_0$-6)")] was obtained. The hydrogenation ratio of the hydrogenated polyisoprene block of the resultant block copolymer ($Z_0$-6) was 99% or more.

(Production of Block Copolymer (Z-6))

118 Milliliters of methylene chloride and 59.4 ml of acetic anhydride were added to a three-necked flask having an internal volume of 1 L that had been purged with nitrogen after its drying, and 28.8 ml of concentrated sulfuric acid were dropped to the mixture while the mixture was stirred at 0°C. The mixture was further stirred at 0°C for 60 minutes to prepare a sulfonating agent. Meanwhile, 40 g of the block copolymer ($Z_0$-6) were loaded into a reaction vessel made of glass having an internal volume of 3 L and provided with a stirring machine, and the inside of the system was purged with nitrogen. After that, 524 ml of methylene chloride were charged into the vessel and the copolymer was dissolved by stirring the mixture at normal temperature for 4 hours. 205 Milliliters of the sulfonating agent prepared in advance were dropped to the solution over 5 minutes. The mixture was stirred at normal temperature for 48 hours and then 100 ml of distilled water were dropped to the mixture to terminate the reaction. While the mixture was stirred, 600 ml of distilled water were further gradually dropped to the mixture to precipitate solid matter. Methylene chloride was removed from the mixed liquid by distillation at normal pressure. After that, the residue was centrifuged (at 10,000 rpm for 30

minutes) and the supernatant was discarded. The remaining solid matter was transferred to a beaker, 1.0 L of distilled water was added to the beaker, and the solid matter was washed under stirring. After that, the solid matter was recovered again by centrifugation. The washing and centrifugation were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-6)"). The resultant block copolymer (Z-6) had a ratio of a sulfonic acid group with respect to a structural unit derived from styrene (sulfonation ratio) of 98 mol% and an ion exchange capacity of 2.6 meq/g.

[Production Example 7]

(Production of Block Copolymer ($Z_0$-7))

615 Milliliters of dehydrated cyclohexane and 1.33 ml of sec-butyllithium (0.90 mol/L cyclohexane solution) were added to an autoclave having an internal volume of 1.4 L that had been purged with nitrogen after its drying. After that, while the mixture was stirred at 60°C, 20.7 ml of styrene, 14.3 ml of 4-tert-butylstyrene, 61.4 ml of isoprene, 14.3 ml of 4-tert-butylstyrene, and 20.7 ml of styrene were sequentially added and polymerized. Thus, polystyrene-b-poly(4-tert-butylstyrene)-b-polyisoprene-b-poly(4-tert-butylstyrene) -b-polystyrene was obtained. The resultant block copolymer had a Mn of 147,000, a 1,4-bond amount of a polyisoprene block of 94.0%, a content of a structural unit derived from styrene of 34.0 % by weight, and a content of a structural unit derived from 4-tert-butylstyrene of 26.0 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer (Zo) formed of a polystyrene polymer block (the polymer block ($A_0$)), a hydrogenated polyisoprene polymer block (the polymer block (B)), and a poly(4-tert-butylstyrene) polymer block (the polymer block (C)) [polystyrene-b-poly(4-tert-butylstyrene)-b-hydrogenated polyisoprene-b-poly(4-tert-butylstyrene)-b-polystyrene (hereinafter referred to as "block copolymer ($Z_0$-7)")] was obtained. The hydrogenation ratio of the hydrogenated polyisoprene block of the resultant block copolymer ($Z_0$-7) was 99% or more.

(Production of Block Copolymer (Z-7))

115 Milliliters of methylene chloride and 57.7 ml of acetic anhydride were added to a three-necked flask having an internal volume of 1 L that had been purged with nitrogen after its drying, and 27.9 ml of concentrated sulfuric acid were dropped to the mixture while the mixture was stirred at 0°C. The mixture was further stirred at 0°C for 60 minutes to prepare a sulfonating agent. Meanwhile, 40 g of the block copolymer ($Z_0$-7) were loaded into a reaction vessel made of glass having an internal volume of 3 L and provided with a stirring machine, and the inside of the system was purged with nitrogen. After that, 528 ml of methylene chloride were charged into the vessel and the copolymer was dissolved by stirring the mixture at normal temperature for 4 hours. 200 Milliliters of the sulfonating agent prepared in advance were dropped to the solution over 5 minutes. The mixture was stirred at normal temperature for 48 hours and then 100 ml of distilled water were dropped to the mixture to terminate the reaction. While the mixture was stirred, 600 ml of distilled water were further gradually dropped to the mixture to precipitate solid matter. Methylene chloride was removed from the mixed liquid by distillation at normal pressure and then the residue was filtered. The recovered solid matter was transferred to a beaker, 1.0 L of distilled water was added to the beaker, and the solid matter was washed under stirring. After that, the solid matter was recovered again by filtration. The washing and filtration were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-7)"). The resultant block copolymer (Z-7) had a ratio of a sulfonic acid group with respect to a structural unit derived from styrene (sulfonation ratio) of 98 mol% and an ion exchange capacity of 2.5 meq/g.

[Production Example 8]

(Production of Block Copolymer ($Z_0$-8))

429 Milliliters of dehydrated cyclohexane and 1.40 ml of sec-butyllithium (1.10 mol/L cyclohexane solution) were added to an autoclave having an internal volume of 1,000 ml that had been purged with nitrogen after its drying. After that, while the mixture was stirred at 60°C, 9.9 ml of styrene, 7.4 ml of 4-tert-butylstyrene, 18.4 ml of isoprene, 7.4 ml of 4-tert-butylstyrene, 9.9 ml of styrene, and 7.4 ml of 4-tert-butylstyrene were sequentially added and polymerized. Thus, polystyrene-b-poly(4-tert-butylstyrene)-b-polyisoprene-b-poly(4-tert-butylstyrene) -b-polystyrene-b-poly(4-tert-butylstyrene) was obtained. The resultant block copolymer had a Mn of 78,000, a 1,4-bond amount of a polyisoprene

block of 94.0%, a content of a structural unit derived from styrene of 35.5 % by weight, and a content of a structural unit derived from 4-tert-butylstyrene of 39.6 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer (Zo) formed of a polystyrene polymer block (the polymer block ($A_0$)), a hydrogenated polyisoprene polymer block (the polymer block (B)), and a poly(4-tert-butylstyrene) polymer block (the polymer block (C)) [polystyrene-b-poly(4-tert-butylstyrene)-b-hydrogenated polyisoprene-b-poly(4-tert-butylstyrene)-b-polystyrene-b-poly(4-tert-butylstyrene) (hereinafter referred to as "block copolymer ($Z_0$-8)")] was obtained. The hydrogenation ratio of the hydrogenated polyisoprene block of the resultant block copolymer ($Z_0$-8) was 99% or more.

(Production of Block Copolymer (Z-8))

146 Milliliters of methylene chloride and 73.1 ml of acetic anhydride were added to a three-necked flask having an internal volume of 1 L that had been purged with nitrogen after its drying, and 32.7 ml of concentrated sulfuric acid were dropped to the mixture while the mixture was stirred at 0°C. The mixture was further stirred at 0°C for 60 minutes to prepare a sulfonating agent. Meanwhile, 40 g of the block copolymer ($Z_0$-8) were loaded into a reaction vessel made of glass having an internal volume of 3 L and provided with a stirring machine, and the inside of the system was purged with nitrogen. After that, 500 ml of methylene chloride were charged into the vessel and the copolymer was dissolved by stirring the mixture at normal temperature for 4 hours. 251 Milliliters of the sulfonating agent prepared in advance were dropped to the solution over 5 minutes. The mixture was stirred at normal temperature for 48 hours and then 100 ml of distilled water were dropped to the mixture to terminate the reaction. While the mixture was stirred, 600 ml of distilled water were further gradually dropped to the mixture to precipitate solid matter. Methylene chloride was removed from the mixed liquid by distillation at normal pressure and then the residue was filtered. The recovered solid matter was transferred to a beaker, 1.0 L of distilled water was added to the beaker, and the solid matter was washed under stirring. After that, the solid matter was recovered again by filtration. The washing and filtration were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-8)"). The resultant block copolymer (Z-8) had a ratio of a sulfonic acid group with respect to a structural unit derived from styrene (sulfonation ratio) of 99 mol% and an ion exchange capacity of 2.7 meq/g.

[Production Example 9]

(Production of Block Copolymer ($Z_0$-9))

757 Milliliters of dehydrated cyclohexane, 3.33 ml of sec-butyllithium (1.12 mol/L cyclohexane solution), and 27 ml of tetrahydrofuran were added to an autoclave having an internal volume of 2,000 ml that had been purged with nitrogen after its drying. After that, while the mixture was stirred at 60°C, 28.3 ml of 4-tert-butylstyrene, 81.7 ml of styrene, 28.3 ml of 4-tert-butylstyrene, 171 ml of butadiene, 28.3 ml of 4-tert-butylstyrene, 81.7 ml of styrene, and 28.3 ml of 4-tert-butylstyrene were sequentially added and polymerized. Thus, poly(4-tert-butylstyrene)-b-polystyrene-b-poly(4-tert-butylstyrene)-b-polybutadie ne-b-poly(4-tert-butylstyrene)-b-polystyrene-b-poly(4-tert-butylstyrene) was obtained. The resultant block copolymer had a Mn of 108,000, a 1,4-bond amount of a polybutadiene block of 55.0%, a content of a structural unit derived from styrene of 39.9 % by weight, and a content of a structural unit derived from 4-tert-butylstyrene of 29.5 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer (Zo) formed of a polystyrene polymer block (the polymer block ($A_0$)), a hydrogenated polybutadiene polymer block (the polymer block (B)), and a poly(4-tert-butylstyrene) polymer block (the polymer block (C)) [poly(4-tert-butylstyrene)-b-polystyrene-b-poly(4-tert-butylstyrene)-b-polybutadie ne-b-poly(4-tert-butylstyrene)-b-polystyrene-b-poly(4-tert-butylstyrene) (hereinafter referred to as "block copolymer ($Z_0$-9)")] was obtained. The hydrogenation ratio of the hydrogenated polybutadiene block of the resultant block copolymer ($Z_0$-9) was 99% or more.

(Production of Block Copolymer (Z-9))

114 Milliliters of methylene chloride and 57.4 ml of acetic anhydride were added to a three-necked flask having an internal volume of 1 L that had been purged with nitrogen after its drying, and 33.4 ml of concentrated sulfuric acid

were dropped to the mixture while the mixture was stirred at 0°C. The mixture was further stirred at 0°C for 60 minutes to prepare a sulfonating agent. Meanwhile, 40 g of the block copolymer ($Z_0$-9) were loaded into a reaction vessel made of glass having an internal volume of 3 L and provided with a stirring machine, and the inside of the system was purged with nitrogen. After that, 522 ml of methylene chloride were charged into the vessel and the copolymer was dissolved by stirring the mixture at normal temperature for 4 hours. 204 Milliliters of the sulfonating agent prepared in advance were dropped to the solution over 5 minutes. The mixture was stirred at normal temperature for 48 hours and then 100 ml of distilled water were dropped to the mixture to terminate the reaction. While the mixture was stirred, 600 ml of distilled water were further gradually dropped to the mixture to precipitate solid matter. Methylene chloride was removed from the mixed liquid by distillation at normal pressure and then the residue was filtered. The recovered solid matter was transferred to a beaker, 1.0 L of distilled water was added to the beaker, and the solid matter was washed under stirring. After that, the solid matter was recovered again by filtration. The washing and filtration were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-9)"). The resultant block copolymer (Z-9) had a ratio of a sulfonic acid group with respect to a structural unit derived from styrene (sulfonation ratio) of 99 mol% and an ion exchange capacity of 2.9 meq/g.

[Production Example 10]

(Production of Block Copolymer ($Z_0$-10))

154 Milliliters of α-methylstyrene, 318 ml of dehydrated cyclohexane, 41 ml of dehydrated hexane, and 5 ml of dehydrated tetrahydrofuran were added to an autoclave having an internal volume of 1.4 L that had been purged with nitrogen after its drying. Subsequently, 18.4 ml of sec-butyllithium (1.20 mol/L cyclohexane solution) were added to the mixture and then the whole was polymerized at -10°C for 3 hours. The number-average molecular weight of a poly (α-methylstyrene) 3 hours after the initiation of the polymerization was 6,300 and the polymerization conversion ratio of α-methylstyrene was 88%. Next, 27 ml of butadiene were added to the resultant and polymerization was performed by stirring the mixture for 30 minutes. After that, the temperature of the resultant was increased to 10°C. At this time point, the polymerization conversion ratio of α-methylstyrene was 88% and the number-average molecular weight was 8,000. Subsequently, 237 g of a polymerization liquid were extracted and 843 ml of cyclohexane were added to the liquid to dilute the liquid. 217 Milliliters of butadiene were further added to the diluted liquid and the mixture was polymerized at 40°C for 2 hours. After that, 40 ml of a solution of 3 parts by weight of phenyl benzoate in cyclohexane were added to the resultant, and coupling was performed by stirring the mixture at 40°C for 1 hour. Thus, a poly(α-methylstyrene)-b-polybutadiene-b-poly(α-methylstyrene) type triblock copolymer was synthesized. The resultant block copolymer had a Mn of 78,000, a 1,4-bond amount of a polybutadiene block of 55.0%, and a content of a structural unit derived from α-methylstyrene of 28.0 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer (Zo) formed of a poly(α-methylstyrene) polymer block (the polymer block ($A_0$)) and a hydrogenated polybutadiene polymer block (the polymer block (B)) [poly(α-methylstyrene)-b-polybutadiene-b-poly(α-methylstyrene) (hereinafter referred to as "block copolymer ($Z_0$-10)")] was obtained. The hydrogenation ratio of the hydrogenated polybutadiene block of the resultant block copolymer ($Z_0$-10) was 99% or more.

(Production of Block Copolymer (Z-10))

95.0 Milliliters of methylene chloride and 46.0 ml of acetic anhydride were added to a three-necked flask having an internal volume of 1 L that had been purged with nitrogen after its drying, and 20.0 ml of concentrated sulfuric acid were dropped to the mixture while the mixture was stirred at 0°C. The mixture was further stirred at 0°C for 60 minutes to prepare a sulfonating agent. Meanwhile, 40 g of the block copolymer ($Z_0$-10) were loaded into a reaction vessel made of glass having an internal volume of 3 L and provided with a stirring machine, and the inside of the system was purged with nitrogen. After that, 677 ml of methylene chloride were charged into the vessel and the copolymer was dissolved by stirring the mixture at normal temperature for 4 hours. 160 Milliliters of the sulfonating agent prepared in advance were dropped to the solution over 5 minutes. The mixture was stirred at normal temperature for 48 hours and then 100 ml of distilled water were dropped to the mixture to terminate the reaction. While the mixture was stirred, 600 ml of distilled water were further gradually dropped to the mixture to precipitate solid matter. Methylene chloride was removed from the mixed liquid by distillation at normal pressure and then the residue was filtered. The recovered solid matter was transferred to a beaker, 1.0 L of distilled water was added to the beaker, and the solid matter was washed under

stirring. After that, the solid matter was recovered again by filtration. The washing and filtration were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-10)"). The resultant block copolymer (Z-10) had a ratio of a sulfonic acid group with respect to a structural unit derived from $\alpha$-methylstyrene (sulfonation ratio) of 99 mol% and an ion exchange capacity of 2.0 meq/g.

[Production Example 11]

(Production of Block Copolymer ($Z_0$-11))

576 Milliliters of dehydrated cyclohexane and 1.78 ml of sec-butyllithium (1.15 mol/L cyclohexane solution) were added to an autoclave having an internal volume of 1,000 ml that had been purged with nitrogen after its drying. After that, while the mixture was stirred at 60°C, 32.2 ml of 4-tert-butylstyrene, 13.6 ml of styrene, 82.7 ml of isoprene, 13.6 ml of styrene, and 32.2 ml of 4-tert-butylstyrene were sequentially added and polymerized. Thus, poly(4-tert-butylstyrene)-b-polystyrene-b-polyisoprene-b-polystyrene-b-poly(4-tert -butylstyrene) was obtained. The resultant block copolymer had a Mn of 94,700, a 1,4-bond amount of a polyisoprenen block of 94.0%, a content of a structural unit derived from styrene of 17.6 % by weight, and a content of a structural unit derived from 4-tert-butylstyrene of 43.4 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer ($Z_0$) formed of a polystyrene polymer block (the polymer block ($A_0$)), a hydrogenated polyisoprene polymer block (the polymer block (B)), and a poly(4-tert-butylstyrene) polymer block (the polymer block (C)) [poly(4-tert-butylstyrene)-b-polystyrene-b-polyisoprene-b-polystyrene-b-poly(4-ter t-butylstyrene) (hereinafter referred to as "block copolymer ($Z_0$-11)")] was obtained. The hydrogenation ratio of the hydrogenated polyisoprene block of the resultant block copolymer ($Z_0$-11) was 99% or more.

(Production of Block Copolymer (Z-11))

60.6 Milliliters of methylene chloride and 30.3 ml of acetic anhydride were added to a three-necked flask having an internal volume of 1 L that had been purged with nitrogen after its drying, and 14.7 ml of concentrated sulfuric acid were dropped to the mixture while the mixture was stirred at 0°C. The mixture was further stirred at 0°C for 60 minutes to prepare a sulfonating agent. Meanwhile, 40 g of the block copolymer ($Z_0$-11) were loaded into a reaction vessel made of glass having an internal volume of 3 L and provided with a stirring machine, and the inside of the system was purged with nitrogen. After that, 496 ml of methylene chloride were charged into the vessel and the copolymer was dissolved by stirring the mixture at normal temperature for 4 hours. 105 Milliliters of the sulfonating agent prepared in advance were dropped to the solution over 5 minutes. The mixture was stirred at normal temperature for 48 hours and then 100 ml of distilled water were dropped to the mixture to terminate the reaction. While the mixture was stirred, 600 ml of distilled water were further gradually dropped to the mixture to precipitate solid matter. Methylene chloride was removed from the mixed liquid by distillation at normal pressure and then the residue was filtered. The recovered solid matter was transferred to a beaker, 1.0 L of distilled water was added to the beaker, and the solid matter was washed under stirring. After that, the solid matter was recovered again by filtration. The washing and filtration were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-11)"). The resultant block copolymer (Z-11) had a ratio of a sulfonic acid group with respect to a structural unit derived from styrene (sulfonation ratio) of 99 mol% and an ion exchange capacity of 1.5 meq/g.

[Production Example 12]

(Production of Block Copolymer ($Z_0$-12))

626 Milliliters of dehydrated cyclohexane and 1.26 ml of sec-butyllithium (1.1 mol/L cyclohexane solution) were added to an autoclave having an internal volume of 1.4 L that had been purged with nitrogen after its drying. After that, while the mixture was stirred at 60°C, 18.3 ml of styrene, 78.2 ml of isoprene, and 18.3 ml of styrene were sequentially added and polymerized. Thus, polystyrene-b-polyisoprene-b-polystyrene was obtained. The resultant block copolymer had a Mn of 136,000, a 1,4-bond amount of a polyisoprene block calculated by $^1$H-NMR (400 MHz) of 94.0%, and a content of a structural unit derived from styrene of 37.4 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer ($Z_0$) formed of a polystyrene polymer block (the polymer block ($A_0$)) and a hydrogenated polyisoprene polymer block (the polymer block (B)) [polystyrene-b-hydrogenated polyisoprene-b-polystyrene (hereinafter referred to as "block copolymer ($Z_0$-12)")] was obtained. The hydrogenation ratio of the hydrogenated polyisoprene block of the resultant block copolymer ($Z_0$-12) was 99% or more.

(Production of Block Copolymer (Z-12))

107 Milliliters of acetic anhydride and 62.0 ml of sulfuric acid were mixed in 213 ml of methylene chloride at 0°C to prepare a sulfonating agent. Meanwhile, 80 g of the block copolymer ($Z_0$-12) were loaded into a 5-L reaction vessel made of glass provided with a stirring machine, and the following operation was repeated three times: the inside of the system was evacuated to a vacuum and nitrogen was introduced into the system. After that, 964 ml of methylene chloride were charged into the vessel in a state where nitrogen was introduced, and the copolymer was dissolved by stirring the mixture at normal temperature for 4 hours. After that, 382 ml of the sulfonating agent were dropped to the solution over 5 minutes. The mixture was stirred at normal temperature for 48 hours, and then 500 ml of distilled water were dropped to the mixture under stirring to terminate the reaction, and to precipitate solid matter. Methylene chloride was removed by distillation at normal pressure and then the residue was filtered. The recovered solid matter was transferred to a beaker, 2.0 L of distilled water were added to the beaker, and the solid matter was washed under stirring. After that, the solid matter was recovered again by filtration. Such washing and filtration were repeated until no change in pH of the washing water was observed, and then the recovered solid matter was dried at 1.3 kPa and 30°C for 24 hours. Thus, the block copolymer (Z) (hereinafter referred to as "block copolymer (Z-12)") was obtained. The resultant block copolymer (Z-12) had a ratio of a sulfonic acid group with respect to a structural unit derived from styrene (sulfonation ratio) of 100 mol% and an ion exchange capacity of 2.8 meq/g.

[Production Example 13]

(Production of Block Copolymer ($Z_0$-13))

688 Milliliters of dehydrated cyclohexane and 1.83 ml of sec-butyllithium (0.75 mol/L cyclohexane solution) were added to an autoclave having an internal volume of 1.4 L that had been purged with nitrogen after its drying. After that, while the mixture was stirred at 60°C, 20.4 ml of styrene, 5.7 ml of 4-tert-butylstyrene, 10.2 ml of styrene, 5.7 ml of 4-tert-butylstyrene, 98.3 ml of isoprene, 5.7 ml of 4-tert-butylstyrene, 10.2 ml of styrene, and 5.7 ml of 4-tert-butylstyrene were sequentially added and polymerized. Thus, polystyrene-b-poly(4-tert-butylstyrene)-b-polystyrene-b-poly(4-tert-butylstyrene)-b-polyisoprene-b-poly(4-tert-butylstyrene)-b-polystyrene-b-poly(4-tert-butylstyren e) was obtained. The resultant block copolymer had a Mn of 122,000, a 1,4-bond amount of a polyisoprene block of 94.0%, a content of a structural unit derived from styrene of 29.9 % by weight, and a content of a structural unit derived from 4-tert-butylstyrene of 18.1 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer ($Z_0$) formed of a polystyrene polymer block (the polymer block ($A_0$)), a hydrogenated polyisoprene polymer block (the polymer block (B)), and a poly(4-tert-butylstyrene) polymer block (the polymer block (C)) [polystyrene-b-poly(4-tert-butylstyrene)-b-polystyrene-b-poly(4-tert-butylstyrene) -b-hydrogenated polyisoprene-b-poly(4-tert-butylstyrene)-b-polystyrene-b-poly(4-tert-butylstyrene) (hereinafter referred to as "block copolymer ($Z_0$-13)")] was obtained. The hydrogenation ratio of the hydrogenated polyisoprene block of the resultant block copolymer ($Z_0$-13) was 99% or more.

(Production of Block Copolymer (Z-13))

104 Milliliters of methylene chloride and 52.0 ml of acetic anhydride were added to a three-necked flask having an internal volume of 1 L that had been purged with nitrogen after its drying, and 24.0 ml of concentrated sulfuric acid were dropped to the mixture while the mixture was stirred at 0°C. The mixture was further stirred at 0°C for 60 minutes to prepare a sulfonating agent. Meanwhile, 30 g of the block copolymer ($Z_0$-13) were loaded into a reaction vessel made of glass having an internal volume of 2 L and provided with a stirring machine, and the inside of the system was purged with nitrogen. After that, 375 ml of methylene chloride were charged into the vessel and the copolymer was dissolved by stirring the mixture at normal temperature for 4 hours. 180 Milliliters of the sulfonating agent prepared in advance were dropped to the solution over 5 minutes. The mixture was stirred at normal temperature for 48 hours and then 100

ml of distilled water were dropped to the mixture to terminate the reaction. While the mixture was stirred, 500 ml of distilled water were further gradually dropped to the mixture to precipitate solid matter. Methylene chloride was removed from the mixed liquid by distillation at normal pressure and then the residue was filtered. The recovered solid matter was transferred to a beaker, 1.0 L of distilled water was added to the beaker, and the solid matter was washed under stirring. After that, the solid matter was recovered again by filtration. The washing and filtration were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-13)"). The resultant block copolymer (Z-13) had a ratio of a sulfonic acid group with respect to a structural unit derived from styrene (sulfonation ratio) of 85 mol% and an ion exchange capacity of 2.0 meq/g.

[Production Example 14]

(Production of Block Copolymer ($Z_0$-14))

904 Milliliters of dehydrated cyclohexane and 3.30 ml of sec-butyllithium (0.83 mol/L cyclohexane solution) were added to an autoclave having an internal volume of 2 L that had been purged with nitrogen after its drying. After that, while the mixture was stirred at 60°C, 29.0 ml of styrene, 21.4 ml of 4-tert-butylstyrene, 29.0 ml of styrene, 21.4 ml of 4-tert-butylstyrene, 97.0 ml of isoprene, 21.4 ml of 4-tert-butylstyrene, 29.0 ml of styrene, and 21.4 ml of 4-tert-butylstyrene were sequentially added and polymerized. Thus, polystyrene-b-poly(4-tert-butylstyrene)-b-polystyrene-b-poly(4-tert-butylstyrene)-b-polyisoprene-b-poly(4-tert-butylstyrene)-b-polystyrene-b-poly(4-tert-butylstyren e) was obtained. The resultant block copolymer had a Mn of 126,000, a 1,4-bond amount of a polyisoprene block of 94.0%, a content of a structural unit derived from styrene of 35.4 % by weight, and a content of a structural unit derived from 4-tert-butylstyrene of 34.3 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer ($Z_0$) formed of a polystyrene polymer block (the polymer block ($A_0$)), a hydrogenated polyisoprene polymer block (the polymer block (B)), and a poly(4-tert-butylstyrene) polymer block (the polymer block (C)) [polystyrene-b-poly(4-tert-butylstyrene)-b-polystyrene-b-poly(4-tert-butylstyrene) -b-hydrogenated polyisoprene-b-poly(4-tert-butylstyrene)-b-polystyrene-b-poly(4-tert-butylstyrene) (hereinafter referred to as "block copolymer ($Z_0$-14)")] was obtained. The hydrogenation ratio of the hydrogenated polyisoprene block of the resultant block copolymer ($Z_0$-14) was 99% or more.

(Production of Block Copolymer (Z-14))

262 Milliliters of methylene chloride and 131 ml of acetic anhydride were added to a three-necked flask having an internal volume of 1 L that had been purged with nitrogen after its drying, and 59 ml of concentrated sulfuric acid were dropped to the mixture while the mixture was stirred at 0°C. The mixture was further stirred at 0°C for 60 minutes to prepare a sulfonating agent. Meanwhile, 72 g of the block copolymer ($Z_0$-14) were loaded into a reaction vessel made of glass having an internal volume of 5 L and provided with a stirring machine, and the inside of the system was purged with nitrogen. After that, 900 ml of methylene chloride were charged into the vessel and the copolymer was dissolved by stirring the mixture at normal temperature for 4 hours. 452 Milliliters of the sulfonating agent prepared in advance were dropped to the solution over 5 minutes. The mixture was stirred at normal temperature for 48 hours and then 100 ml of distilled water were dropped to the mixture to terminate the reaction. While the mixture was stirred, 500 ml of distilled water were further gradually dropped to the mixture to precipitate solid matter. Methylene chloride was removed from the mixed liquid by distillation at normal pressure and then the residue was filtered. The recovered solid matter was transferred to a beaker, 1.0 L of distilled water was added to the beaker, and the solid matter was washed under stirring. After that, the solid matter was recovered again by filtration. The washing and filtration were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-14)"). The resultant block copolymer (Z-14) had a ratio of a sulfonic acid group with respect to a structural unit derived from styrene (sulfonation ratio) of 98 mol% and an ion exchange capacity of 2.6 meq/g.

[Production Example 15]

(Production of Block Copolymer (Z-15))

17.5 Milliliters of methylene chloride and 8.7 ml of acetic anhydride were added to a three-necked flask having an internal volume of 100 mL that had been purged with nitrogen after its drying, and 3.9 ml of concentrated sulfuric acid were dropped to the mixture while the mixture was stirred at 0°C. The mixture was further stirred at 0°C for 60 minutes to prepare a sulfonating agent. Meanwhile, 40 g of the block copolymer ($Z_0$-10) obtained in Production Example 10 were loaded into a reaction vessel made of glass having an internal volume of 2 L and provided with a stirring machine, and the inside of the system was purged with nitrogen. After that, 677 ml of methylene chloride were charged into the vessel and the copolymer was dissolved by stirring the mixture at normal temperature for 4 hours. 30 Milliliters of the sulfonating agent prepared in advance were dropped to the solution over 5 minutes. The mixture was stirred at normal temperature for 48 hours and then 100 ml of distilled water were dropped to the mixture to terminate the reaction. While the mixture was stirred, 600 ml of distilled water were further gradually dropped to the mixture to precipitate solid matter. Methylene chloride was removed from the mixed liquid by distillation at normal pressure and then the residue was filtered. The recovered solid matter was transferred to a beaker, 1.0 L of distilled water was added to the beaker, and the solid matter was washed under stirring. After that, the solid matter was recovered again by filtration. The washing and filtration were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-15)"). The resultant block copolymer (Z-15) had a ratio of a sulfonic acid group with respect to a structural unit derived from α-methylstyrene (sulfonation ratio) of 50 mol% and an ion exchange capacity of 1.0 meq/g.

[Production Example 16]

(Production of Block Copolymer (Z-16))

8.0 Milliliters of acetic anhydride and 5.0 ml of sulfuric acid were mixed in 16.0 ml of methylene chloride at 0°C to prepare a sulfonating agent. Meanwhile, 30 g of the block copolymer ($Z_0$-4) obtained in Production Example 4 were loaded into a 2-L reaction vessel made of glass provided with a stirring machine, and the following operation was repeated three times: the inside of the system was evacuated to a vacuum and nitrogen was introduced into the system. After that, 425 ml of methylene chloride were charged into the vessel in a state where nitrogen was introduced, and the copolymer was dissolved by stirring the mixture at normal temperature for 4 hours. After that, 29.0 ml of the sulfonating agent were dropped to the solution over 5 minutes. The mixture was stirred at normal temperature for 48 hours, and then 500 ml of distilled water were dropped to the mixture under stirring to terminate the reaction, and to precipitate solid matter. Methylene chloride was removed by distillation at normal pressure and then the residue was filtered. The recovered solid matter was transferred to a beaker, 1.0 L of distilled water was added to the beaker, and the solid matter was washed under stirring. After that, the solid matter was recovered again by filtration. Such washing and filtration were repeated until no change in pH of the washing water was observed, and then the recovered solid matter was dried at 1.3 kPa and 30°C for 24 hours. Thus, the block copolymer (Z) (hereinafter referred to as "block copolymer (Z-16)") was obtained. The resultant block copolymer (Z-16) had a ratio of a sulfonic acid group with respect to a structural unit derived from styrene (sulfonation ratio) of 55 mol% and an ion exchange capacity of 1.4 meq/g.

[Production Example 17]

(Production of Block Copolymer ($Z_0$-17))

615 Milliliters of dehydrated cyclohexane and 1.28 ml of sec-butyllithium (1.20 mol/L cyclohexane solution) were added to an autoclave having an internal volume of 1.4 L that had been purged with nitrogen after its drying. After that, while the mixture was stirred at 60°C, 28.0 ml of styrene, 8.1 ml of 4-tert-butylstyrene, 112 ml of isoprene, 8.1 ml of 4-tert-butylstyrene, and 28.0 ml of styrene were sequentially added and polymerized. Thus, polystyrene-b-poly(4-tert-butylstyrene)-b-polyisoprene-b-poly(4-tert-butylstyrene) -b-polystyrene was obtained. The resultant block copolymer had a Mn of 159,000, a 1,4-bond amount of a polyisoprene block of 94.0%, a content of a structural unit derived from styrene of 35.0 % by weight, and a content of a structural unit derived from 4-tert-butylstyrene of 12.2 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer ($Z_0$) formed of a polystyrene polymer block (the polymer block ($A_0$)), a hydrogenated polyisoprene polymer block (the polymer block (B)), and a poly(4-tert-butylstyrene) polymer block (the polymer block (C)) [polystyrene-b-poly(4-tert-butylstyrene)-b-hydrogenated polyisoprene-b-poly(4-tert-butylstyrene)-b-polystyrene (hereinafter referred to as "block copolymer ($Z_0$-17)")] was obtained. The hydrogenation ratio of the hydrogenated polyisoprene block of the resultant block copolymer ($Z_0$-17) was 99% or more.

(Production of Block Copolymer (Z-17))

162 Milliliters of methylene chloride and 81 ml of acetic anhydride were added to a three-necked flask having an internal volume of 1 L that had been purged with nitrogen after its drying, and 36 ml of concentrated sulfuric acid were dropped to the mixture while the mixture was stirred at 0°C. The mixture was further stirred at 0°C for 60 minutes to prepare a sulfonating agent. Meanwhile, 50 g of the block copolymer ($Z_0$-17) were loaded into a reaction vessel made of glass having an internal volume of 3 L and provided with a stirring machine, and the inside of the system was purged with nitrogen. After that, 800 ml of methylene chloride were charged into the vessel and the copolymer was dissolved by stirring the mixture at normal temperature for 4 hours. 279 Milliliters of the sulfonating agent prepared in advance were dropped to the solution over 5 minutes. The mixture was stirred at normal temperature for 48 hours and then 100 ml of distilled water were dropped to the mixture to terminate the reaction. While the mixture was stirred, 500 ml of distilled water were further gradually dropped to the mixture to precipitate solid matter. Methylene chloride was removed from the mixed liquid by distillation at normal pressure and then the residue was filtered. The recovered solid matter was transferred to a beaker, 1.0 L of distilled water was added to the beaker, and the solid matter was washed under stirring. After that, the solid matter was recovered again by filtration. The washing and filtration were repeated until no change in pH of the washing water was observed, and then the resultant solid matter was dried at 1.3 kPa and 30°C for 24 hours. Thus, the block copolymer (Z) to be used in the polymer electrolyte membrane of the present invention was obtained (hereinafter referred to as "block copolymer (Z-17)"). The resultant block copolymer (Z-17) had a ratio of a sulfonic acid group with respect to a structural unit derived from styrene (sulfonation ratio) of 99 mol% and an ion exchange capacity of 2.6 meq/g.

[Production Example 18]

(Production of Block Copolymer ($Z_0$-18))

626 Milliliters of dehydrated cyclohexane and 1.26 ml of sec-butyllithium (1.2 mol/L cyclohexane solution) were added to an autoclave having an internal volume of 1.4 L that had been purged with nitrogen after its drying. After that, while the mixture was stirred at 60°C, 27.6 ml of styrene, 131 ml of isoprene, and 27.6 ml of styrene were sequentially added and polymerized. Thus, polystyrene-b-polyisoprene-b-polystyrene was obtained. The resultant block copolymer had a Mn of 142,000, a 1,4-bond amount of a polyisoprene block calculated by $^1$H-NMR (400 MHz) of 94.0%, and a content of a structural unit derived from styrene of 36.4 % by weight.

A solution of the block copolymer in cyclohexane was prepared and charged into a pressure-resistant container purged with nitrogen, and a hydrogenation reaction was performed with a Ni/Al-based Ziegler type catalyst under a hydrogen pressure of from 0.5 to 1.0 MPa at 70°C for 18 hours. Thus, the block copolymer (Zo) formed of a polystyrene polymer block (the polymer block ($A_0$)) and a hydrogenated polyisoprene polymer block (the polymer block (B)) [polystyrene-b-hydrogenated polyisoprene-b-polystyrene (hereinafter referred to as "block copolymer ($Z_0$-18)")] was obtained. The hydrogenation ratio of the hydrogenated polyisoprene block of the resultant block copolymer ($Z_0$-18) was 99% or more.

(Production of Block Copolymer (Z-18))

104 Milliliters of acetic anhydride and 60.0 ml of sulfuric acid were mixed in 208 ml of methylene chloride at 0°C to prepare a sulfonating agent. Meanwhile, 80 g of the block copolymer ($Z_0$-18) were loaded into a 5-L reaction vessel made of glass provided with a stirring machine, and the following operation was repeated three times: the inside of the system was evacuated to a vacuum and nitrogen was introduced into the system. After that, 939 ml of methylene chloride were charged into the vessel in a state where nitrogen was introduced, and the copolymer was dissolved by stirring the mixture at normal temperature for 4 hours. After that, 372 ml of the sulfonating agent were dropped to the solution over 5 minutes. The mixture was stirred at normal temperature for 48 hours, and then 500 ml of distilled water were dropped to the mixture under stirring to terminate the reaction, and to precipitate solid matter. Methylene chloride was removed by distillation at normal pressure and then the residue was filtered. The recovered solid matter was transferred to a beaker, 2.0 L of distilled water were added to the beaker, and the solid matter was washed under stirring. After that, the solid matter was recovered again by filtration. Such washing and filtration were repeated until no change in pH of the washing water was observed, and then the recovered solid matter was dried at 1.3 kPa and 30°C for 24 hours. Thus, the block copolymer (Z) (hereinafter referred to as "block copolymer (Z-18)") was obtained. The resultant

block copolymer (Z-18) had a ratio of a sulfonic acid group with respect to a structural unit derived from styrene (sulfonation ratio) of 97 mol% and an ion exchange capacity of 2.6 meq/g.

[Production Example 19]

(Production of Sulfonated Polyether Ether Ketone)

After a reaction vessel made of glass provided with a stirring machine had been purged with nitrogen, 30 g of a polyether ether ketone resin (PEEK, 450P manufactured by VICTREX) were loaded into the vessel. 550 Grams of concentrated sulfuric acid were loaded into the vessel and the resin was dissolved by stirring the mixture at room temperature. After the mixture had been stirred at room temperature for 110 hours, the reaction product was poured into water cooled with ice, and a polymer was solidified and precipitated. The solid matter was filtered out and the resultant solid matter was transferred to a beaker. 2 Liters of distilled water were added to the beaker and the solid matter was washed under stirring. After that, the solid matter was recovered by filtration. The washing and filtration operations were repeated until no change in pH of the washing water was observed, and finally the polymer collected by filtration was dried in a vacuum to provide sulfonated polyether ether ketone (hereinafter referred to as "SPEEK"). $^1$H-NMR analysis showed that the sulfonation ratio of the resultant SPEEK in terms of a monomer unit was 69%, and the ion exchange capacity of the sulfonated polyether ether ketone was 2.0 meq/g.

[Example 1]

(Production of Polymer electrolyte Membrane)

An 11.7 wt% solution of the block copolymer (Z-1) obtained in Production Example 1 in a mixed solvent of toluene and isobutyl alcohol (mass ratio: 65/35) was prepared. After that, 3,3'-ethylenedioxydiphenol (manufactured by Tokyo Chemical Industry Co., Ltd.) was added as a crosslinking agent so that a mass ratio "block copolymer (Z-1)/3,3'-ethylenedioxydiphenol" became 100/8.6. Thus, a fluid composition was prepared. Next, the top of a PET film subjected to release treatment (manufactured by Toyo Boseki, trade name: K1504) was coated with the fluid composition having a thickness of about 300 μm, and the composition was dried in a hot air dryer at 100°C for 4 minutes to provide a polymer electrolyte membrane having a thickness of 20 μm. The resultant polymer electrolyte membrane was crosslinked by being thermally treated in a thermostat at 120°C for 72 hours. Thus, the polymer electrolyte membrane of the present invention was produced.

[Example 2]

(Production of Polymer electrolyte Membrane)

An 11.5 wt% solution of the block copolymer (Z-2) obtained in Production Example 2 in a mixed solvent of toluene and isobutyl alcohol (mass ratio: 77/23) was prepared. After that, 3,3'-ethylenedioxydiphenol (manufactured by Tokyo Chemical Industry Co., Ltd.) was added as a crosslinking agent so that a mass ratio "block copolymer (Z-2)/3,3'-ethylenedioxydiphenol" became 100/9.6. Thus, a fluid composition was prepared. Next, the top of a PET film subjected to release treatment (manufactured by Mitsubishi Plastics, Inc., trade name: MRV) was coated with the fluid composition having a thickness of about 300 μm, and the composition was dried in a hot air dryer at 100°C for 4 minutes to provide a polymer electrolyte membrane having a thickness of 20 μm. The resultant polymer electrolyte membrane was crosslinked by being thermally treated in a thermostat at 120°C for 61 hours. Thus, the polymer electrolyte membrane of the present invention was produced.

[Example 3]

(Production of Polymer electrolyte Membrane)

A polymer electrolyte membrane having a thickness of 20 μm was obtained in the same manner as in Example 2 except that poly-4-vinylphenol (Maruzen Petrochemical, product name: MARUKA LYNCUR M, grade: S-1, number-average molecular weight (Mn): 1,100 to 1,500) was added as a crosslinking agent instead of 3,3'-ethylenedioxydiphenol so that a mass ratio "block copolymer (Z-2)/poly-4-vinylphenol" became 100/9.4. The resultant polymer electrolyte membrane was crosslinked by being thermally treated in a thermostat at 120°C for 66 hours. Thus, the polymer electrolyte membrane of the present invention was produced.

[Example 4]

(Production of Polymer electrolyte Membrane)

A polymer electrolyte membrane having a thickness of 20 μm was obtained in the same manner as in Example 2 except that 3,3'-ethylenedioxydiphenol was added so that the mass ratio "block copolymer (Z-2)/3,3'-ethylenedioxydiphenol" became 100/3.2. The resultant polymer electrolyte membrane was crosslinked by being thermally treated in a thermostat at 115°C for 40 hours. Thus, the polymer electrolyte membrane of the present invention was produced.

[Example 5]

(Production of Polymer electrolyte Membrane)

A 12.5 wt% solution of the block copolymer (Z-1) obtained in Production Example 1 in a mixed solvent of toluene and isobutyl alcohol (mass ratio: 65/35) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-1)/poly-4-vinylphenol" became 100/5.0. Thus, a fluid composition was prepared. Next, the top of a PET film subjected to release treatment (manufactured by Mitsubishi Plastics, Inc., trade name: MRF75) was coated with the fluid composition having a thickness of about 350 μm, and the composition was dried in a hot air dryer at 100°C for 6 minutes to provide a polymer electrolyte membrane having a thickness of 20 μm. The resultant polymer electrolyte membrane was crosslinked by being thermally treated in a stream of nitrogen at 140°C for 1 hour. Thus, the polymer electrolyte membrane of the present invention was produced.

[Example 6]

(Production of Polymer electrolyte Membrane)

A polymer electrolyte membrane having a thickness of 20 μm was obtained in the same manner as in Example 3 except that poly-4-vinylphenol (Maruzen Petrochemical, product name: MARUKA LYNCUR M, grade: S-1, number-average molecular weight (Mn): 1,100 to 1,500) was added so that the mass ratio "block copolymer (Z-2)/poly-4-vinylphenol" became 100/15. The resultant polymer electrolyte membrane was crosslinked by being thermally treated in a thermostat at 130°C for 48 hours. Thus, the polymer electrolyte membrane of the present invention was produced.

[Example 7]

(Production of Polymer electrolyte Membrane)

A polymer electrolyte membrane having a thickness of 20 μm was obtained in the same manner as in Example 3 except that poly-4-vinylphenol (Maruzen Petrochemical, product name: MARUKA LYNCUR M, grade: S-1, number-average molecular weight (Mn): 1,100 to 1,500) was added so that the mass ratio "block copolymer (Z-2)/poly-4-vinylphenol" became 100/4.7. The resultant polymer electrolyte membrane was crosslinked by being thermally treated in a thermostat at 130°C for 48 hours. Thus, the polymer electrolyte membrane of the present invention was produced.

[Example 8]

(Production of Polymer electrolyte Membrane)

A polymer electrolyte membrane having a thickness of 20 μm was obtained in the same manner as in Example 3 except that poly-4-vinylphenol (Maruzen Petrochemical, product name: MARUKA LYNCUR M, grade: S-1, number-average molecular weight (Mn): 1,100 to 1,500) was added so that the mass ratio "block copolymer (Z-2)/poly-4-vinylphenol" became 100/3.1. The resultant polymer electrolyte membrane was crosslinked by being thermally treated in a thermostat at 130°C for 48 hours. Thus, the polymer electrolyte membrane of the present invention was produced.

[Example 9]

(Production of Polymer electrolyte Membrane)

A polymer electrolyte membrane having a thickness of 20 μm was obtained in the same manner as in Example

3 except that poly-4-vinylphenol (Maruzen Petrochemical, product name: MARUKA LYNCUR M, grade: S-1, number-average molecular weight (Mn): 1,100 to 1,500) was added so that the mass ratio "block copolymer (Z-2)/poly-4-vinylphenol" became 100/2.3. The resultant polymer electrolyte membrane was crosslinked by being thermally treated in a thermostat at 130°C for 48 hours. Thus, the polymer electrolyte membrane of the present invention was produced.

[Example 10]

(Production of Polymer electrolyte Membrane)

A polymer electrolyte membrane having a thickness of 20 μm was obtained in the same manner as in Example 3 except that poly-4-vinylphenol (Maruzen Petrochemical, product name: MARUKA LYNCUR M, grade: S-1, number-average molecular weight (Mn): 1,100 to 1,500) was added so that the mass ratio "block copolymer (Z-2)/poly-4-vinylphenol" became 100/0.6. The resultant polymer electrolyte membrane was crosslinked by being thermally treated in a thermostat at 130°C for 120 hours. Thus, the polymer electrolyte membrane of the present invention was produced.

[Example 11]

(Production of Polymer electrolyte Membrane)

A polymer electrolyte membrane having a thickness of 20 μm was obtained in the same manner as in Example 3 except that poly-4-vinylphenol (Maruzen Petrochemical, product name: MARUKA LYNCUR M, grade: S-1, number-average molecular weight (Mn): 1,100 to 1,500) was added so that the mass ratio "block copolymer (Z-2)/poly-4-vinylphenol" became 100/0.3. The resultant polymer electrolyte membrane was crosslinked by being thermally treated in a thermostat at 130°C for 160 hours. Thus, the polymer electrolyte membrane of the present invention was produced.

[Example 12]

(Production of Polymer electrolyte Membrane)

The polymer electrolyte membrane of the present invention was produced in the same manner as in Example 7 except that thermal treatment was performed in a thermostat at 130°C for 120 hours.

[Example 13]

(Production of Polymer electrolyte Membrane)

A polymer electrolyte membrane having a thickness of 20 μm was obtained in the same manner as in Example 3 except that 2,2'-biphenol (Tokyo Chemical Industry Co., Ltd.) was added as a crosslinking agent instead of poly-4-vinylphenol so that a mass ratio "block copolymer (Z-2)/2,2'-biphenol" became 100/2.4. The resultant polymer electrolyte membrane was crosslinked by being thermally treated in a thermostat at 115°C for 40 hours. Thus, the polymer electrolyte membrane of the present invention was produced.

[Example 14]

(Production of Polymer electrolyte Membrane)

A polymer electrolyte membrane having a thickness of 20 μm was obtained in the same manner as in Example 3 except that 2,6-bis(2,4-dihydroxybenzyl)-4-methylphenol (ASAHI ORGANIC CHEMICALS INDUSTRY CO., LTD.) was added as a crosslinking agent instead of poly-4-vinylphenol so that a mass ratio "block copolymer (Z-2)/2,6-bis(2,4-dihydroxybenzyl)-4-methylphenol" became 100/4.6. The resultant polymer electrolyte membrane was crosslinked by being thermally treated in a thermostat at 115°C for 96 hours. Thus, the polymer electrolyte membrane of the present invention was produced.

[Example 15]

(Production of Polymer electrolyte Membrane)

A polymer electrolyte membrane having a thickness of 20 μm was obtained in the same manner as in Example

3 except that 2,6-bis(2-hydroxy-5-methylbenzyl)-4-methylphenol (ASAHI ORGANIC CHEMICALS INDUSTRY CO., LTD.) was added as a crosslinking agent instead of poly-4-vinylphenol so that a mass ratio "block copolymer (Z-2)/2,6-bis(2-hydroxy-5-methylbenzyl)-4-methylphenol" became 100/4.5. The resultant polymer electrolyte membrane was crosslinked by being thermally treated in a thermostat at 115°C for 68 hours. Thus, the polymer electrolyte membrane of the present invention was produced.

[Example 16]

(Production of Polymer electrolyte Membrane)

A polymer electrolyte membrane having a thickness of 20 μm was obtained in the same manner as in Example 3 except that 1,4-bis(3-hydroxyphenoxy)benzene (Tokyo Chemical Industry Co., Ltd.) was added as a crosslinking agent instead of poly-4-vinylphenol so that a mass ratio "block copolymer (Z-2)/1,4-bis(3-hydroxyphenoxy)benzene" became 100/11.5. The resultant polymer electrolyte membrane was crosslinked by being thermally treated in a thermostat at 115°C for 40 hours. Thus, the polymer electrolyte membrane of the present invention was produced.

[Example 17]

(Production of Polymer electrolyte Membrane)

A 12.0 wt% solution of the block copolymer (Z-4) obtained in Production Example 4 in a mixed solvent of toluene and isobutyl alcohol (mass ratio: 65/35) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-4)/poly-4-vinylphenol" became 100/8.4. Thus, a fluid composition was prepared. Next, the top of a PET film subjected to release treatment (manufactured by Mitsubishi Plastics, Inc., trade name: MRF75) was coated with the fluid composition having a thickness of about 350 μm, and the composition was dried in a hot air dryer at 100°C for 6 minutes to provide a polymer electrolyte membrane having a thickness of 21 μm. The resultant polymer electrolyte membrane was crosslinked by being thermally treated in a stream of nitrogen at 140°C for 6 hours. Thus, the polymer electrolyte membrane of the present invention was produced.

[Example 18]

(Production of Polymer electrolyte Membrane)

A polymer electrolyte membrane having a thickness of 20 μm was obtained in the same manner as in Example 17 except that in addition to the poly-4-vinylphenol, 2,6-bis(2,4-dihydroxybenzyl)-4-methylphenol (manufactured by ASAHI ORGANIC CHEMICALS INDUSTRY CO., LTD.) was added as a crosslinking agent so that a mass ratio "block copolymer (Z-4)/poly-4-vinylphenol/2,6-bis(2,4-dihydroxybenzyl)-4-methylphenol" became 100/5.4/3.0. After that, the polymer electrolyte membrane was crosslinked by being thermally treated in a stream of nitrogen at 140°C for 10 hours. Thus, the polymer electrolyte membrane of the present invention was produced.

[Example 19]

(Production of Polymer electrolyte Membrane)

A polymer electrolyte membrane having a thickness of 20 μm was obtained in the same manner as in Example 1 except that poly-4-vinylphenol (Maruzen Petrochemical, product name: MARUKA LYNCUR M, grade: S-1, number-average molecular weight (Mn): 1,100 to 1,500) was added as a crosslinking agent instead of 3,3'-ethylenedioxydiphenol so that a mass ratio "block copolymer (Z-1)/poly-4-vinylphenol" became 100/8.4. The resultant polymer electrolyte membrane was crosslinked by being thermally treated in a thermostat at 120°C for 17 hours. Thus, the polymer electrolyte membrane of the present invention was produced.

[Example 20]

(Production of Polymer electrolyte Membrane)

A polymer electrolyte membrane having a thickness of 20 μm was obtained in the same manner as in Example 19 except that the block copolymer (Z-5) obtained in Production Example 5 was added instead of the block copolymer

(Z-1) obtained in Production Example 1 so that a mass ratio "block copolymer (Z-5)/poly-4-vinylphenol" became 100/8.4. The resultant polymer electrolyte membrane was crosslinked by being thermally treated in a thermostat at 115°C for 40 hours. Thus, the polymer electrolyte membrane of the present invention was produced.

[Example 21]

(Production of Polymer electrolyte Membrane)

A 10 wt% solution of the block copolymer (Z-6) obtained in Production Example 6 in a mixed solvent of toluene and isobutyl alcohol (mass ratio: 7/3) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-6)/poly-4-vinylphenol" became 100/9.4. Thus, a fluid composition was prepared. Next, the top of a PET film subjected to release treatment (manufactured by Mitsubishi Plastics, Inc., trade name: MRF75) was coated with the fluid composition having a thickness of about 350 μm, and the composition was dried in a hot air dryer at 100°C for 6 minutes to provide a polymer electrolyte membrane having a thickness of 20 μm. The resultant polymer electrolyte membrane was crosslinked by being thermally treated in a thermostat at 115°C for 40 hours. Thus, the polymer electrolyte membrane of the present invention was produced.

[Example 22]

(Production of Polymer electrolyte Membrane)

An 11 wt% solution of the block copolymer (Z-7) obtained in Production Example 7 in a mixed solvent of toluene and isobutyl alcohol (mass ratio: 7/3) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-7)/poly-4-vinylphenol" became 100/9.4. Thus, a fluid composition was prepared. Next, the top of a PET film subjected to release treatment (manufactured by Mitsubishi Plastics, Inc., trade name: MRF75) was coated with the fluid composition having a thickness of about 350 μm, and the composition was dried in a hot air dryer at 100°C for 6 minutes to provide a polymer electrolyte membrane having a thickness of 20 μm. The resultant polymer electrolyte membrane was crosslinked by being thermally treated in a thermostat at 115°C for 40 hours. Thus, the polymer electrolyte membrane of the present invention was produced.

[Example 23]

(Production of Polymer electrolyte Membrane)

A 15 wt% solution of the block copolymer (Z-8) obtained in Production Example 8 in a mixed solvent of toluene and isobutyl alcohol (mass ratio: 75/25) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-8)/poly-4-vinylphenol" became 100/9.4. Thus, a fluid composition was prepared. Next, the top of a PET film subjected to release treatment (manufactured by Mitsubishi Plastics, Inc., trade name: MRF75) was coated with the fluid composition having a thickness of about 250 μm, and the composition was dried in a hot air dryer at 100°C for 6 minutes to provide a polymer electrolyte membrane having a thickness of 20 μm. The resultant polymer electrolyte membrane was crosslinked by being thermally treated in a thermostat at 130°C for 72 hours. Thus, the polymer electrolyte membrane of the present invention was produced.

[Example 24]

(Production of Polymer electrolyte Membrane)

A 15 wt% solution of the block copolymer (Z-9) obtained in Production Example 9 in a mixed solvent of toluene and isobutyl alcohol (mass ratio: 7/3) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-9)/poly-4-vinylphenol" became 100/10.5. Thus, a fluid composition was prepared. Next, the top of a PET film subjected to release treatment (manufactured by Mitsubishi Plastics, Inc., trade name: MRF75) was coated with the fluid composition having a thickness of about 200 μm, and the composition was dried in a hot air dryer at 100°C for 6 minutes to provide a polymer electrolyte membrane having a thickness of 20 μm. The resultant polymer electrolyte membrane was crosslinked by being thermally treated in a thermostat at 130°C

for 72 hours. Thus, the polymer electrolyte membrane of the present invention was produced.

[Example 25]

(Production of Polymer electrolyte Membrane)

A 12 wt% solution of the block copolymer (Z-10) obtained in Production Example 10 in a mixed solvent of toluene and isobutyl alcohol (mass ratio: 7/3) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-10)/poly-4-vinylphenol" became 100/7.2. Thus, a fluid composition was prepared. Next, the top of a PET film subjected to release treatment (manufactured by Mitsubishi Plastics, Inc., trade name: MRF75) was coated with the fluid composition having a thickness of about 100 μm, and the composition was dried in a hot air dryer at 100°C for 6 minutes. After that, the resultant was coated again with the fluid composition having a thickness of about 250 μm, and the composition was dried in a hot air dryer at 100°C for 6 minutes to provide a polymer electrolyte membrane having a thickness of 20 μm. The resultant polymer electrolyte membrane was crosslinked by being thermally treated in a thermostat at 130°C for 72 hours. Thus, the polymer electrolyte membrane of the present invention was produced.

[Example 26]

(Production of Polymer electrolyte Membrane)

A 16 wt% solution of the block copolymer (Z-11) obtained in Production Example 11 in a mixed solvent of toluene and isobutyl alcohol (mass ratio: 7/3) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-11)/poly-4-vinylphenol" became 100/5.0. Thus, a fluid composition was prepared. Next, the top of a PET film subjected to release treatment (manufactured by Mitsubishi Plastics, Inc., trade name: MRF75) was coated with the fluid composition having a thickness of about 225 μm, and the composition was dried in a hot air dryer at 100°C for 6 minutes to provide a polymer electrolyte membrane having a thickness of 18 μm. The resultant polymer electrolyte membrane was crosslinked by being thermally treated in a stream of nitrogen at 140°C for 2.5 hours. Thus, the polymer electrolyte membrane of the present invention was produced.

[Example 27]

(Production of Polymer electrolyte Membrane)

A 8 wt% solution of the block copolymer (Z-12) obtained in Production Example 12 in a mixed solvent of toluene and isobutyl alcohol (mass ratio: 65/35) was prepared. After that, poly-4-vinylphenol (Maruzen Petrochemical, product name: MARUKA LYNCUR M, grade: S-1, number-average molecular weight (Mn): 1,100 to 1,500) and 2,6-bis(2,4-dihydroxybenzyl)-4-methylphenol (ASAHI ORGANIC CHEMICALS INDUSTRY CO., LTD.) were added as crosslinking agents so that a mass ratio "block copolymer (Z-12)/poly-4-vinylphenol/2,6-bis(2,4-dihydroxybenzyl)-4-methylphenol" became 100/3.4/3.0. Thus, a fluid composition was prepared. Next, the top of a PET film subjected to release treatment (manufactured by Mitsubishi Plastics, Inc., trade name: MRF75) was coated with the fluid composition having a thickness of about 200 μm, and the composition was dried in a hot air dryer at 100°C for 6 minutes. After that, the resultant was coated again with the fluid composition having a thickness of about 200 μm, and the composition was dried in a hot air dryer at 100°C for 6 minutes to provide a polymer electrolyte membrane having a thickness of 20 μm. The resultant polymer electrolyte membrane was crosslinked by being thermally treated in a stream of nitrogen at 140°C for 0.5 hour. Thus, the polymer electrolyte membrane of the present invention was produced.

[Example 28]

(Production of Polymer electrolyte Membrane)

A 10.3 wt% solution of the block copolymer (Z-13) obtained in Production Example 13 in a mixed solvent of toluene and isobutyl alcohol (mass ratio: 7/3) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-13)/poly-4-vinylphenol" became 100/7.2. Thus, a fluid composition was prepared. Next, the top of a PET film subjected to release treatment (manufactured by Mitsubishi

Plastics, Inc., trade name: MRF75) was coated with the fluid composition having a thickness of about 350 μm, and the composition was dried in a hot air dryer at 100°C for 6 minutes to provide a polymer electrolyte membrane having a thickness of 20 μm. The resultant polymer electrolyte membrane was crosslinked by being thermally treated in a thermostat at 130°C for 31 hours. Thus, the polymer electrolyte membrane of the present invention was produced.

[Example 29]

(Production of Polymer electrolyte Membrane)

A 16.4 wt% solution of the block copolymer (Z-14) obtained in Production Example 14 in a mixed solvent of toluene and isobutyl alcohol (mass ratio: 75/25) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-14)/poly-4-vinylphenol" became 100/9.4. Thus, a fluid composition was prepared. Next, the top of a PET film subjected to release treatment (manufactured by Mitsubishi Plastics, Inc., trade name: MRF75) was coated with the fluid composition having a thickness of about 200 μm, and the composition was dried in a hot air dryer at 100°C for 6 minutes to provide a polymer electrolyte membrane having a thickness of 20 μm. The resultant polymer electrolyte membrane was crosslinked by being thermally treated in a thermostat at 130°C for 48 hours. Thus, the polymer electrolyte membrane of the present invention was produced.

[Example 30]

(Production of Polymer electrolyte Membrane)

A 16 wt% solution of the block copolymer (Z-15) obtained in Production Example 15 in a mixed solvent of toluene and isobutyl alcohol (mass ratio: 8/2) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-15)/poly-4-vinylphenol" became 100/3.6. Thus, a fluid composition was prepared. Next, the top of a PET film subjected to release treatment (manufactured by Mitsubishi Plastics, Inc., trade name: MRF75) was coated with the fluid composition having a thickness of about 250 μm, and the composition was dried in a hot air dryer at 100°C for 6 minutes to provide a polymer electrolyte membrane having a thickness of 22 μm. The resultant polymer electrolyte membrane was crosslinked by being thermally treated in a stream of nitrogen at 140°C for 2.5 hours. Thus, the polymer electrolyte membrane of the present invention was produced.

[Example 31]

(Production of Polymer electrolyte Membrane)

A 14 wt% solution of the block copolymer (Z-16) obtained in Production Example 16 in a mixed solvent of toluene and isobutyl alcohol (mass ratio: 7/3) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-16)/poly-4-vinylphenol" became 100/4.8. Thus, a fluid composition was prepared. Next, the top of a PET film subjected to release treatment (manufactured by Mitsubishi Plastics, Inc., trade name: MRF75) was coated with the fluid composition having a thickness of about 300 μm, and the composition was dried in a hot air dryer at 100°C for 6 minutes to provide a polymer electrolyte membrane having a thickness of 20 μm. The resultant polymer electrolyte membrane was crosslinked by being thermally treated in a stream of nitrogen at 140°C for 2.5 hours. Thus, the polymer electrolyte membrane of the present invention was produced.

[Example 32]

(Production of Polymer electrolyte Membrane)

An 8 wt% solution of the block copolymer (Z-17) obtained in Production Example 17 in a mixed solvent of toluene and isobutyl alcohol (mass ratio: 75/25) was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "block copolymer (Z-17)/poly-4-vinylphenol" became 100/9.4. Thus, a fluid composition was prepared. Next, the top of a PET film subjected to release treatment (manufactured by Mitsubishi Plastics, Inc., trade name: MRF75) was coated with the fluid composition having a thickness of about 250 μm, and the composition was dried in a hot air dryer at 100°C for 6 minutes. After that, the resultant was coated again with the fluid

composition having a thickness of about 200 μm, and the composition was dried in a hot air dryer at 100°C for 6 minutes to provide a polymer electrolyte membrane having a thickness of 21 μm. The resultant polymer electrolyte membrane was crosslinked by being thermally treated in a thermostat at 115°C for 40 hours. Thus, the polymer electrolyte membrane of the present invention was produced.

[Example 33]

(Production of Polymer electrolyte Membrane)

A 9.5 wt% solution of the block copolymer (Z-18) obtained in Production Example 18 in a mixed solvent of toluene and isobutyl alcohol (mass ratio: 65/35) was prepared. After that, poly-4-vinylphenol (Maruzen Petrochemical, product name: MARUKA LYNCUR M, grade: S-1, number-average molecular weight (Mn): 1,100 to 1,500) and 2,6-bis(2,4-dihydroxybenzyl)-4-methylphenol (ASAHI ORGANIC CHEMICALS INDUSTRY CO., LTD.) were added as crosslinking agents so that a mass ratio "block copolymer (Z-18)/poly-4-vinylphenol/2,6-bis(2,4-dihydroxybenzyl)-4-methylphenol" became 100/6.4/3.0. Thus, a fluid composition was prepared. Next, the top of a PET film subjected to release treatment (manufactured by Mitsubishi Plastics, Inc., trade name: MRF75) was coated with the fluid composition having a thickness of about 450 μm, and the composition was dried in a hot air dryer at 100°C for 6 minutes to provide a polymer electrolyte membrane having a thickness of 20 μm. The resultant polymer electrolyte membrane was crosslinked by being thermally treated in a stream of nitrogen at 140°C for 0.5 hour. Thus, the polymer electrolyte membrane of the present invention was produced.

[Example 34]

A polymer electrolyte membrane having a thickness of 20 μm was obtained in the same manner as in Example 15 except that 2,6-bis(2-hydroxy-5-methylbenzyl)-4-methylphenol was added so that a mass ratio "block copolymer (Z-2)/2,6-bis(2-hydroxy-5-methylbenzyl)-4-methylphenol" became 100/1.4. The resultant polymer electrolyte membrane was crosslinked by being thermally treated in a thermostat at 115°C for 87 hours. Thus, the polymer electrolyte membrane of the present invention was produced.

[Example 35]

The polymer electrolyte membrane of the present invention was obtained in the same manner as in Example 34 except that 2,6-bis(2-hydroxy-5-methylbenzyl)-4-methylphenol was added so that a mass ratio "block copolymer (Z-2)/2,6-bis(2-hydroxy-5-methylbenzyl)-4-methylphenol" became 100/0.5.

[Comparative Example 1]

(Production of Polymer electrolyte Membrane)

A 16 wt% solution of the block copolymer (Z-1) obtained in Production Example 1 in a mixed solvent of toluene and isobutyl alcohol (mass ratio: 70/30) was prepared. After that, a 40 wt% solution of 1,2-polybutadiene (manufactured by Nippon Soda Co., Ltd., trade name: PB-1000; number-average molecular weight: 1,000, polymerization degree: 19) in toluene was added as a crosslinking agent so that a mass ratio "block copolymer (Z-1)/1,2-polybutadiene" became 100/5.0. Thus, a fluid composition was prepared. Next, the top of a PET film subjected to release treatment (manufactured by Toyo Boseki, trade name: K1504) was coated with the fluid composition having a thickness of about 350 μm, and the composition was dried in a hot air dryer at 100°C for 4 minutes to provide a polymer electrolyte membrane having a thickness of 30 μm. The resultant polymer electrolyte membrane was crosslinked by being irradiated with an electron beam from an electrocurtain type electron beam irradiation apparatus (manufactured by IWASAKI ELECTRIC CO., LTD., trade name: CB250/30/20 mA) at an acceleration voltage of 150 kV, a beam current of 8.6 mA, and a dose of 300 kGy. Thus, a polymer electrolyte membrane of Comparative Example 1 was produced.

[Comparative Example 2]

(Production of Polymer electrolyte Membrane)

A 16 wt% solution of the block copolymer (Z-3) obtained in Production Example 3 in a mixed solvent of toluene and isobutyl alcohol (mass ratio: 70/30) was prepared as a fluid composition. Next, the top of a PET film subjected to release treatment (manufactured by Toyo Boseki, trade name: K1504) was coated with the fluid composition having a

thickness of about 350 μm. The composition was sufficiently dried at room temperature and then sufficiently dried in a vacuum to provide a membrane having a thickness of 30 μm. The resultant membrane was subjected to hot pressing at 130°C under a pressure of 1 MPa for 5 minutes to produce a polymer electrolyte membrane of Comparative Example 2.

[Comparative Example 3]

(Production of Polymer electrolyte Membrane)

A polymer electrolyte membrane having a thickness of 20 μm was obtained in the same manner as in Example 3 except that α,α'-dihydroxy-1,4-diisopropylbenzene (manufactured by Tokyo Chemical Industry Co., Ltd.) was added instead of the poly-4-vinylphenol so that a mass ratio "block copolymer (Z-2)/α,α'-dihydroxy-1,4-diisopropylbenzene" became 100/7.0. The resultant polymer electrolyte membrane was thermally treated in a thermostat at 130°C for 72 hours to produce a polymer electrolyte membrane of Comparative Example 3.

[Comparative Example 4]

(Production of Polymer electrolyte Membrane)

A polymer electrolyte membrane having a thickness of 20 μm was obtained in the same manner as in Example 3 except that 1,3-diphenoxybenzene (manufactured by Tokyo Chemical Industry Co., Ltd.) was added instead of the poly-4-vinylphenol so that a mass ratio "block copolymer (Z-2)/1,3-diphenoxybenzene" became 100/9.3. The resultant polymer electrolyte membrane was thermally treated in a thermostat at 130°C for 72 hours to produce a polymer electrolyte membrane of Comparative Example 4.

[Comparative Example 5]

(Production of Polymer electrolyte Membrane)

A polymer electrolyte membrane having a thickness of 20 μm was obtained in the same manner as in Example 3 except that diethylene glycol (manufactured by Wako Pure Chemical Industries, Ltd.) was added instead of the poly-4-vinylphenol so that a mass ratio "block copolymer (Z-2)/diethylene glycol" became 100/4.0. The resultant polymer electrolyte membrane was thermally treated in a thermostat at 130°C for 72 hours to produce a polymer electrolyte membrane of Comparative Example 5.

[Comparative Example 6]

(Production of Polymer electrolyte Membrane)

A 5.3 wt% solution of the SPEEK obtained in Production Example 19 in dimethyl sulfoxide was prepared. After that, poly-4-vinylphenol (Maruzen Petrochemical, product name: MARUKA LYNCUR M, grade: S-1, number-average molecular weight (Mn): 1,100 to 1,500) was added as a crosslinking agent so that a mass ratio "SPEEK/poly-4-vinylphenol" became 100/7.2. Thus, a fluid composition was prepared. Next, the fluid composition having a thickness of about 446 μm was cast on a polytetrafluoroethylene sheet. The composition was sufficiently dried at room temperature and then dried in a vacuum dryer at 30°C for 72 hours to provide a polymer electrolyte membrane having a thickness of 20 μm. The resultant polymer electrolyte membrane was thermally treated in a thermostat at 115°C for 120 hours to produce a polymer electrolyte membrane of Comparative Example 6.

(Tests of Polymer electrolyte Membranes of Examples and Comparative Examples for Performance, and Results of the Tests)

The polymer electrolyte membrane used in each of Examples and Comparative Examples was evaluated for its performance by the following measurement and evaluation methods. Table 1 shows the results.

(Hot Water Resistance Test 1: Insoluble Matter Residual Ratio 1)

A test piece (represented as a mass $m_1$) of a polymer electrolyte membrane cut out so as to measure 2 cm by 4 cm, the test piece having been stored at 25°C under a relative humidity of 50%RH for 4 hours or more, was loaded into a 30-mL screw tube. 25 Milliliters of distilled water were added to the tube, and the tube was stopped with a screw

plug and placed in a metal container made of SUS. After the container had been stored in a thermostat at 90°C, the contents in the screw tube were dried at 1.3 kPa and 30°C for 12 hours. Next, the contents were stored at 25°C under a relative humidity of 50%RH for 4 hours, and then their mass (represented as a mass $m_2$) was measured. The time period for which the container was stored in the thermostat was set to 270 hours in each of Examples 1 to 3 and Comparative Example 1, and was set to 72 hours in Comparative Example 2.

An insoluble matter residual ratio (1a) was determined from the following equation.

$$\text{Insoluble matter residual ratio (1a) (\%)} = m_2/m_1 \times 100$$

In addition, an insoluble matter residual ratio (1b) was determined by performing the same test with another test piece obtained from the same polymer electrolyte membrane.

The arithmetic average of the insoluble matter residual ratio (1a) and insoluble matter residual ratio (1b) thus obtained was defined as an insoluble matter residual ratio 1. When the insoluble matter residual ratio 1 was higher, hot water resistance was judged to be higher.

(Hot Water Resistance Test 2: Visual Observation Test 1)

A test piece of a polymer electrolyte membrane cut out so as to measure 2 cm by 4 cm was immersed in hot water at 90°C for 270 hours, and then the state of the surface of the polymer electrolyte membrane was visually observed.

(Hot Water Resistance Test 3: Insoluble Matter Residual Ratio 2)

A test piece of a polymer electrolyte membrane cut out so as to measure 3 cm by 5 cm was dried at 1.3 kPa and 50°C for 12 hours, and its mass (represented as a mass $m_3$) was measured. After that, the test piece was loaded into a 110-mL screw tube, 60 mL of distilled water were added to the tube, and a lid was mounted on the tube. After that, the tube was placed in a metal container made of SUS. After the container had been stored in a thermostat at 110°C for 96 hours, the state of the surface of the content (polymer electrolyte membrane) in the screw tube was visually observed. After that, the content was dried at 1.3 kPa and 50°C for 12 hours, and then its mass (represented as a mass $m_4$) was measured.

An insoluble matter residual ratio (2a) was determined from the following equation.

$$\text{Insoluble matter residual ratio (2a) (\%)} = m_4/m_3 \times 100$$

In addition, an insoluble matter residual ratio (2b) was determined by performing the same test with another test piece obtained from the same polymer electrolyte membrane.

The arithmetic average of the insoluble matter residual ratio (2a) and insoluble matter residual ratio (2b) thus obtained was defined as an insoluble matter residual ratio 2. When the insoluble matter residual ratio 2 was higher, hot water resistance was judged to be higher.

(Hot Water Resistance Test 4: Visual Observation Test 2)

A test piece of a polymer electrolyte membrane cut out so as to measure 3 cm by 5 cm was immersed in hot water at 110°C for 96 hours, and then the state of the surface of the polymer electrolyte membrane was visually observed.

(Measurement of Gel Fraction)

The weight of a test piece cut out of the polymer electrolyte membrane obtained in each of Examples and Comparative Examples 1 to 5 so as to measure 4 cm by 8 cm was measured with a precision balance. The weight at this time is represented by $M_1$. The test piece set on an extraction thimble was subjected to reflux treatment for 8 hours with a Soxhlet extractor and 100 ml of tetrahydrofuran. After that, the test piece was taken out, and tetrahydrofuran was removed from the tetrahydrofuran solution by distillation with an evaporator under the conditions of 11 kPa and 40°C. After that, the residue was further dried at 1.3 kPa and 80°C for 12 hours. The weight of only the solid matter residue after the drying was measured with a precision balance. The weight at this time is represented by $M_2$. A gel fraction was determined from an equation "$((M_1-M_2)/M_1) \times 100$ (%)."

In addition, a gel fraction was measured in the same manner as in the foregoing except that: the polymer electrolyte membrane obtained in Comparative Example 6 was used; and dimethyl sulfoxide was used instead of tetrahydrofuran.

(Measurement of Crosslink Density)

A test piece cut out of the polymer electrolyte membrane obtained in each of Examples and Comparative Examples 1 to 5 so as to measure 3 cm by 5 cm was dried at 1.3 kPa and 50°C for 12 hours, and was immersed in 30 ml of a mixed solvent of toluene and isobutyl alcohol (mass ratio: 70/30) for 3 hours. The membrane was taken out and the mass (represented as a mass $m_5$) of the membrane in a state of containing the solvent was measured. After that, the membrane was dried at 1.3 kPa and 50°C for 12 hours, and its mass (represented as a mass $m_6$) was measured, followed by the calculation of a crosslink density from the Flory-Rehner equation.

$$v=\{\ln(1-m_6/m_5)+m_6/m_5+0.4\times(m_6/m_5)^2\}/[102\times\{(m_6/m_5)^{1/3}-(m_6/m_5)/2\}]$$

In addition, a crosslink density was measured in the same manner as in the foregoing except that: the polymer electrolyte membrane obtained in Comparative Example 6 was used; and dimethyl sulfoxide was used instead of a mixed solvent of toluene and isobutyl alcohol (mass ratio: 70/30).

(Measurement of Mechanical Strength)

(1) Measurement of Mechanical Strength at 25°C and Relative Humidity of 40%

A dumbbell-shaped test piece was cut out of a polymer electrolyte membrane, and was subjected to moisture conditioning under the conditions of 25°C and a relatively humidity of 40%. After that, the test piece was set in a tensile tester (Model 5566 manufactured by Instron Japan), and its tensile breaking strength and tensile breaking elongation were measured under the conditions of 25°C, a relative humidity of 40%, and a tension speed of 500 mm/min.

(2) Measurement of Mechanical Strength at 25°C and at Time of Wetting

A dumbbell-shaped test piece was cut out of a polymer electrolyte membrane and immersed in distilled water at 25°C for 12 hours. After that, its tensile breaking strength and tensile breaking elongation were measured in the same manner as in the section (1).

[Voltage Reduction Rate of Fuel Cell]

Meanwhile, for the purpose of evaluating an influence of the hot water resistance of each of the resultant polymer electrolyte membranes on the performance of a fuel cell, the voltage reduction rate of a fuel cell for an evaluation having incorporated therein the polymer electrolyte membrane under high temperature was measured.

First, a piece having an area of 25 $cm^2$ was cut out of the resultant polymer electrolyte membrane, and was sandwiched between two PTFE films each having a thickness of 12.5 $\mu$m the inside of each of which had been cut out so as to have an area of 25 $cm^2$. The resultant was further sandwiched between two electrodes each formed of a catalyst layer formed of Pt catalyst-carrying carbon and Nafion D1021 (manufactured by Du Pont (trade name)), and carbon paper. After that, the resultant was thermally treated with a hot press (at 115°C and 1.0 MPa for 8 minutes). Thus, a membrane-electrode assembly (MEA) was produced. Next, the produced MEA was combined with a gasket and then the resultant was sandwiched between two conductive separators also serving as gas-supplying channels. The outside of the resultant was further sandwiched between two current collectors and between two clamping plates. Thus, an evaluation cell was produced. The fuel cell for an evaluation was assembled by connecting, to the produced evaluation cell, a hose for supplying a gas, a drain hose (having attached to its cathode side a bottle for recovering waste water), a heater power source, a thermocouple, and a terminal for controlling a load current and terminal for detecting a voltage connected to a power generation characteristic analyzer (manufactured by NF CORPORATION). Hydrogen was supplied at 70 cc/min to one electrode (anode) of the fuel cell for an evaluation and air was supplied at 240 cc/min to the other electrode (cathode) thereof, and the fuel cell was operated under the following conditions, followed by the measurement of its voltage reduction rate.
Cell temperature: 80°C
Relative humidity: 100%
Current density: 0.3 A/$cm^2$

(Voltage Reduction Rate 1 of Fuel Cell)

The fuel cell for an evaluation was operated for 1,200 hours, a reduction in its voltage value along with its operating time was tracked by measuring the voltage value with the terminal for detecting a voltage connected to the fuel cell for an evaluation, and a time required for the voltage value to reduce by 10% as compared to that at the time of the initiation of the operation was measured.

(Voltage Reduction Rate 2 of Fuel Cell)

A voltage value $V_1$ (V) after 500 hours of operation and a voltage value $V_2$ (V) after 1,200 hours of operation were measured with the terminal for detecting a voltage connected to the operating fuel cell for an evaluation, and a voltage reduction rate was calculated from the following equation.

$$\text{Voltage reduction rate } (\mu V/hr) = \{(V_1 - V_2)/(1200 - 500)\} \times 10^6$$

(Start-Stop Durability Test)

A piece having an area of 25 $cm^2$ was cut out of a polymer electrolyte membrane, and both of its sides were sandwiched between PET films each having a thickness of 25 μm the inside of each of which had been cut out so as to have an area of 25 $cm^2$. The resultant was sandwiched between two electrodes each formed of a catalyst layer formed of Pt catalyst-carrying carbon and Nafion D1021 (manufactured by Du Pont (trade name)), and carbon paper so that the membrane and each catalyst surface were opposite to each other. The outside of the resultant was sandwiched between two stainless plates, followed by hot pressing (at 115°C and 2 MPa for 8 minutes). Thus, a membrane-electrode assembly was produced. Next, the produced membrane-electrode assembly was sandwiched between two conductive separators also serving as gas-supplying channels, and the outside of the resultant was further sandwiched between two current collectors and between two clamping plates. Thus, a unit cell (having an electrode area of 25 $cm^2$) was produced.

Next, a fuel cell for an evaluation was assembled by connecting, to the produced unit cell, a hose for supplying a gas, a drain hose, a heater power source, a thermocouple, and a terminal for controlling a load current and terminal for detecting a voltage connected to a power generation characteristic analyzer (manufactured by NF CORPORATION).

While the temperature of the unit cell was increased to 80°C, nitrogen at 80°C and 150%R.H. (bubbler temperature: 90°C) was flowed at 200 cc/min from a fuel-supplying pipe through its anode and cathode. Next, while the temperature of the unit cell was maintained at 80°C, hydrogen at 150%R.H. was supplied at a rate of 200 ml/min to the anode and nitrogen at 150%R.H. was supplied at a rate of 200 ml/min to the cathode. Linear sweep voltammetry was performed 1 hour after the initiation of the supply. Current values at the respective voltage values when a voltage value was changed from 0.08 V to 0.50 V at a rate of 0.5 mV/sec were measured, and a hydrogen leak amount (L0) was estimated from the current value at 0.4 V.

After that, while the temperature of the unit cell was maintained at 80°C, the following operation was repeatedly performed: nitrogen at 150%R.H. was supplied at a rate of 2,000 ml/min to the anode and nitrogen at 150%R.H. was supplied at a rate of 2,000 ml/min to the cathode for 2 minutes each, and dry nitrogen was supplied at a rate of 2,000 ml/min to the anode and dry nitrogen was supplied at a rate of 2,000 ml/min to the cathode for 2 minutes each. The operation was repeatedly performed 250 times. Next, while the temperature of the unit cell was maintained at 80°C, hydrogen at 150%R.H. was supplied at a rate of 200 ml/min to the anode and nitrogen at 150%R.H. was supplied at a rate of 200 ml/min to the cathode for 1 hour each. After that, linear sweep voltammetry was performed and a first hydrogen leak amount (L1) was estimated. Further, while the temperature of the unit cell was maintained at 80°C, the following operation was repeatedly performed 250 times: nitrogen at 150%R.H. was supplied at a rate of 2,000 ml/min to the anode and nitrogen at 150%R.H. was supplied at a rate of 2,000 ml/min to the cathode for 2 minutes each, and dry nitrogen was supplied at a rate of 2,000 ml/min to the anode and dry nitrogen was supplied at a rate of 2,000 ml/min to the cathode for 2 minutes each. Next, while the temperature of the unit cell was maintained at 80°C, hydrogen at 150%R.H. was supplied at a rate of 200 ml/min to the anode and nitrogen at 150%R.H. was supplied at a rate of 200 ml/min to the cathode for 1 hour each. After that, linear sweep voltammetry was performed and a hydrogen leak amount was estimated. The foregoing process was repeatedly performed and the stage at which an n-th hydrogen leak amount (Ln) became 10 or more times as large as the L0 was defined as an end point. The value for n is represented as the "number of cycles" in tables.

Table 1

| | | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|
| Polymer electrolyte membrane | Polymer electrolyte (Z) | Production Example | | 1 | 2 | 2 | 2 | 1 | 2 | 2 | 2 | 2 | 2 | 2 | 2 |
| | | Kind | | Z-1 | Z-2 | Z-2 | Z-2 | Z-1 | Z-2 | Z-2 | Z-2 | Z-2 | Z-2 | Z-2 | Z-2 |
| | | Ion exchange capacity (meq/g) | | 2.3 | 2.6 | 2.6 | 2.6 | 2.3 | 2.6 | 2.6 | 2.6 | 2.6 | 2.6 | 2.6 | 2.6 |
| | Crosslinking agent | Kind | | 3,3'-Ethylenedioxydiphenol | 3,3'-Ethylenedioxydiphenol | Poly-4-vinylphenol | 3,3'-Ethylenedioxydiphenol | Poly-4-vinylphenol | Poly-4-vinylphenol | Poly-4-vinylphenol | Poly-4-vinylphenol | Poly-4-vinylphenol | Poly-4-vinylphenol | Poly-4-vinylphenol | Poly-4-vinylphenol |
| | | Addition amount (part(s) by mass)* | | 8.6 | 9.6 | 9.4 | 3.2 | 5.0 | 15 | 4.7 | 3.1 | 2.3 | 0.6 | 0.3 | 4.7 |
| | | Addition amount (parts by mol)** | | 30 | 30 | 30 | 10 | 17 | 47 | 15 | 10 | 7 | 2 | 1 | 15 |
| Result of evaluation | Hot water resistance, 90 °C | Insoluble matter residual ratio 1 (%) | 72 hours | | | | | | | | | | | | |
| | | Insoluble matter residual ratio 1 (%) | 270 hours | 83 | 82 | 90 | | | | | | | | | |
| | | Visual observation test 1 | 270 hours | No change | No change | No change | | | | | | | | | |
| | Hot water resistance, 110°C | Insoluble matter residual ratio 2 (%) | 96 hours | 75 | 80 | 88 | 95 | 92 | 84 | 86 | 95 | 88 | 80 | 82 | 90 |
| | | Visual observation test 2 | 96 hours | No change | No change | No change | No change | No change | No change | No change | No change | No change | No change | No change | No change |
| | Gel fraction (%) | | | >99 | >99 | >99 | >99 | >99 | >99 | >99 | >99 | 96 | >99 | >99 | >99 |
| | Crosslink density ×10$^{-5}$ (mol/ml) | | | 16.8 | 5.8 | 6.4 | 6.5 | 19.4 | 7.4 | 6.5 | 6.3 | 5.4 | 13.2 | 15.1 | 17.4 |
| | Mechanical strength (before crosslinking), 25 °C | 40%R.H. | Tensile breaking elongation (%) | | 500 | 500 | 500 | | 500 | 500 | 500 | 500 | | | 500 |
| | Mechanical strength (after crosslinking), 25 °C | 40%R.H. | Tensile breaking elongation (%) | | | | | | | 320 | | 330 | | | 220 |
| | | 40%R.H. | Tensile breaking strength (MPa) | | | | | | | 18 | | 14 | | | 19 |
| | | At time of wetting | Tensile breaking elongation (%) | | | | 300 | | | 340 | 300 | 360 | | | 160 |
| | | At time of wetting | Tensile breaking strength (MPa) | | | | 11 | | | 11 | 9 | 9 | | | 17 |
| | Constant current durability | Voltage reduction rate 1 (hour(s)) | | | 1,000 | >1,200 | | >1,200 | | | | | >1,200 | | >1,200 |
| | | Voltage reduction rate 2 (μV/hr) | | | | 1 | | 1 | | | | | 2 | | 1 |
| | Start-stop durability | Number of cycles (cycles) | | | | | | | | | | | | | 750 |

*(The number of parts by mass of the crosslinking agent (X) with respect to 100 parts by mass of the polymer electrolyte)

**(The number of parts by mol of the aromatic rings one or more hydrogen atoms of each of which are substituted with

hydroxy groups with respect to 100 parts by mol of the ion-conducting group)

Table 2

| | | | | Example 13 | Example 14 | Example 15 | Example 16 | Example 17 | Example 18 |
|---|---|---|---|---|---|---|---|---|---|
| Polymer electrolyte membrane | Polymer electrolyte (Z) | Production Example | | 2 | 2 | 2 | 2 | 4 | 4 |
| | | Kind | | Z-2 | Z-2 | Z-2 | Z-2 | Z-4 | Z-4 |
| | | Ion exchange capacity (meq/g) | | 2.6 | 2.6 | 2.6 | 2.6 | 2.3 | 2.3 |
| | Crosslinking agent 1 | Kind | | 2,2'-Biphenol | 2,6-Bis(2,4-dihydroxybenzyl)-4-methylphenol | 2,6-Bis(2-hydroxy-5-methylbenzyl)-4-methylphenol | 1,4-Bis(3-hydroxyphenoxy)benzene | Poly-4-vinylphenol | Poly-4-vinylphenol |
| | | Addition amount (part(s) by mass)* | | 2.4 | 4.6 | 4.5 | 11.5 | 8.4 | 5.4 |
| | | Addition amount (parts by mol)** | | 10 | 15 | 15 | 30 | 30 | 23 |
| | Crosslinking agent 2 | Kind | | | | | | | 2,6-Bis(2,4-dihydroxybenzyl)-4-methylphenol |
| | | Addition amount (part(s) by mass)* | | | | | | | 3.0 |
| | | Addition amount (parts by mol)** | | | | | | | 10 |
| Result of evaluation | Hot water resistance, 90°C | Insoluble matter residual ratio 1 (%) | 72 hours | | | | | | |
| | | | 270 hours | | | | | | |
| | | Visual observation test 1 | 270 hours | | | | | | |
| | Hot water resistance, 110°C | Insoluble matter residual ratio 2 (%) | 96 hours | 97 | 90 | 91 | 98 | 94 | 88 |
| | | Visual observation test 2 | 96 hours | No change | No change | No change | No change | No change | No change |
| | Gel fraction (%) | | | >99 | 84 | >99 | 96 | 98 | 98 |
| | Crosslink density ×10$^5$ (mol/ml) | | | 10.0 | 4.0 | 8.0 | 9.0 | 15.6 | 8.9 |
| | Mechanical strength (before crosslinking), 25°C | 40%R.H. | Tensile breaking elongation (%) | 500 | 500 | 500 | 500 | 600 | 600 |
| | Mechanical strength (after crosslinking), 25°C | 40%R.H. | Tensile breaking elongation (%) | | | 360 | | 450 | 450 |
| | | | Tensile breaking strength (MPa) | | | 17 | | 16 | 16 |
| | | At time of wetting | Tensile breaking elongation (%) | 190 | 440 | 470 | | 300 | 400 |
| | | | Tensile breaking strength (MPa) | 5 | 9 | 11 | | 6 | 8 |

*(The number of parts by mass of the crosslinking agent (X) with respect to 100 parts by mass of the polymer electrolyte)

**(The number of parts by mol of the aromatic rings one or more hydrogen atoms of each of which are substituted with hydroxy groups with respect to 100 parts by mol of the ion-conducting group)

Table 3

| | | | | | Example 19 | Example 20 | Example 21 | Example 22 | Example 23 | Example 24 | Example 25 |
|---|---|---|---|---|---|---|---|---|---|---|---|
| Polymer electrolyte membrane | Polymer electrolyte (Z) | Production Example | | | 1 | 5 | 6 | 7 | 8 | 9 | 10 |
| | | Kind | | | Z-1 | Z-5 | Z-6 | Z-7 | Z-8 | Z-9 | Z-10 |
| | | Ion exchange capacity (meq/g) | | | 2.3 | 2.3 | 2.6 | 2.5 | 2.7 | 2.9 | 2.0 |
| | Crosslinking agent | Kind | | | Poly-4-vinylphenol | Poly-4-vinylphenol | Poly-4-vinylphenol | Poly-4-vinylphenol | Poly-4-vinylphenol | Poly-4-vinylphenol | Poly-4-vinylphenol |
| | | Addition amount (part(s) by mass)* | | | 8.4 | 8.4 | 9.4 | 9.4 | 9.4 | 10.5 | 7.2 |
| | | Addition amount (parts by mol)** | | | 30 | 30 | 30 | 30 | 30 | 30 | 30 |
| Result of evaluation | Hot water resistance | 90°C | Insoluble matter residual ratio 1 (%) | 72 hours | | | | | | | |
| | | | | 270 hours | | | | | | | |
| | | | Visual observation test 1 | 270 hours | | | | | | | |
| | | 110°C | Insoluble matter residual ratio 2 (%) | 96 hours | 93 | 95 | 74 | 83 | 84 | 70 | 86 |
| | | | Visual observation test 2 | 96 hours | No change | No change | No change | No change | No change | No change | No change |
| | Gel fraction (%) | | | | 96 | 97 | 88 | >99 | 96 | 94 | 98 |
| | Crosslink density ×$10^5$ (mol/ml) | | | | 8.1 | 11.5 | 14.5 | 16.4 | 4.7 | 5.3 | 9.6 |
| | Mechanical strength (before crosslinking) | 25°C | 40%R.H. | Tensile breaking elongation (%) | | | 380 | | | | |
| | Mechanical strength (after crosslinking) | 25°C | 40%R.H. | Tensile breaking elongation (%) | | | 290 | 380 | | | |
| | | | | Tensile breaking strength (MPa) | | | 16 | 18 | | | |
| | | | At time of wetting | Tensile breaking elongation (%) | | | 280 | 400 | | | |
| | | | | Tensile breaking strength (MPa) | | | 7 | 10 | | | |

*(The number of parts by mass of the crosslinking agent (X) with respect to 100 parts by mass of the polymer electrolyte)

**(The number of parts by mol of the aromatic rings one or more hydrogen atoms of each of which are substituted with hydroxy groups with respect to 100 parts by mol of the ion-conducting group)

Table 4

| | | | | | Example 26 | Example 27 | Example 28 | Example 29 | Example 30 | Example 31 | Example 32 | Example 33 | Example 34 | Example 35 |
|---|---|---|---|---|---|---|---|---|---|---|---|---|---|---|
| Polymer electrolyte membrane | Polymer electrolyte (Z) | Production Example | | | 11 | 12 | 13 | 14 | 15 | 16 | 17 | 18 | 2 | 2 |
| | | Kind | | | Z-11 | Z-12 | Z-13 | Z-14 | Z-15 | Z-16 | Z-17 | Z-18 | Z-2 | Z-2 |
| | | Ion exchange capacity (meq/g) | | | 1.5 | 2.8 | 2.0 | 2.6 | 1.0 | 1.4 | 2.6 | 2.6 | 2.6 | 2.6 |
| | Crosslinking agent | Kind | | | Poly-4-vinylphenol | Poly-4-vinylphenol | Poly-4-vinylphenol | Poly-4-vinylphenol | Poly-4-vinylphenol | Poly-4-vinylphenol | Poly-4-vinylphenol | Poly-4-vinylphenol | 2,6-Bis(2-hydroxy-5-methylbenzyl)-4-methylphenol | 2,6-Bis(2-hydroxy-5-methylbenzyl)-4-methylphenol |
| | | Addition amount (part(s) by mass)* | | | 5.0 | 3.4 | 7.2 | 9.4 | 3.6 | 4.8 | 9.4 | 6.4 | 1.4 | 0.5 |
| | | Addition amount (parts by mol)** | | | 30 | 10 | 30 | 30 | 30 | 30 | 30 | 20 | 5 | 2 |
| | Crosslinking agent 2 | Kind | | | | 2,6-Bis(2,4-dihydroxybenzyl)-4-methylphenol | | | | | | 2,6-Bis(2,4-dihydroxybenzyl)-4-methylphenol | | |
| | | Addition amount (part(s) by mass)* | | | | 3.0 | | | | | | 3.0 | | |
| | | Addition amount (parts by mol)** | | | | 9 | | | | | | 10 | | |
| Result of evaluation | Hot water resistance | 90°C | Insoluble matter residual ratio 1 (%) | 72 hours | | | | | | | | | | |
| | | | | 270 hours | | | | | | | | | | |
| | | | Visual observation test 1 | 270 hours | | | | | | | | | | |
| | | 110°C | Insoluble matter residual ratio 2 (%) | 96 hours | >99 | 67 | 94 | 86 | 95 | 98 | 88 | 62 | 90 | 88 |
| | | | Visual observation test 2 | 96 hours | No change | No change | No change | No change | No change | No change | No change | No change | No change | No change |
| | Gel fraction (%) | | | | 95 | 98 | 97 | 94 | 93 | 96 | >99 | >99 | >99 | 95 |
| | Crosslink density ×10$^5$ (mol/ml) | | | | 6.6 | 7.4 | 4.8 | 4.4 | 14.8 | 10.1 | 4.4 | 6.7 | 10.0 | 10.0 |
| | Mechanical strength (before crosslinking) | 25°C | 40%R.H. | Tensile breaking elongation (%) | | | | | | | 600 | 670 | 500 | 500 |
| | Mechanical strength (after crosslinking) | 25°C | 40%R.H. | Tensile breaking elongation (%) | | | | | | | 490 | | 350 | 320 |
| | | | | Tensile breaking strength (MPa) | | | | | | | 20 | | 16 | 14 |
| | | | At time of wetting | Tensile breaking elongation (%) | | | | | | | 300 | | 450 | 360 |
| | | | | Tensile breaking strength (MPa) | | | | | | | 7 | | 9 | 8 |
| | Start-stop durability | Number of cycles (cycles) | | | | | | | | | >10,000 | | | |

*(The number of parts by mass of the crosslinking agent (X) with respect to 100 parts by mass of the polymer electrolyte)

**(The number of parts by mol of the aromatic rings one or more hydrogen atoms of each of which are substituted with hydroxy groups with respect to 100 parts by mol of the ion-conducting group)

Table 5

| | | | | | Comparative Example 1 | Comparative Example 2 | Comparative Example 3 | Comparative Example 4 | Comparative Example 5 | Comparative Example 6 |
|---|---|---|---|---|---|---|---|---|---|---|
| Polymer electrolyte membrane | Polymer electrolyte (Z) | | Production Example | | 1 | 3 | 2 | 2 | 2 | 19 |
| | | | Kind | | Z-1 | Z-3 | Z-2 | Z-2 | Z-2 | SPEEK |
| | | | Ion exchange capacity (meq/g) | | 2.3 | 1.5 | 2.6 | 2.6 | 2.6 | 2.0 |
| | Crosslinking agent | | Kind | | 1,2-Polybutadiene | - | α,α'-Dihydroxy-1,4-diisopropylbenzene | 1,3-Diphenoxybenzene | Diethylene glycol | Poly-4-vinylphenol |
| | | | Addition amount (part(s) by mass)* | | 5.0 | 0 | 7.0 | 9.3 | 4.0 | 7.2 |
| | | | Addition amount (parts by mol)** | | | | | | | |
| Result of evaluation | Hot water resistance | 90°C | Insoluble matter residual ratio 1 (%) | 72 hours | | 75 | | | | |
| | | | | 270 hours | 48 | | | | | |
| | | | Visual observation test 1 | 270 hours | No change | | | | | |
| | | 110°C | Insoluble matter residual ratio 2 (%) | 96 hours | 0 | 0 | 0 | 0 | 0 | |
| | | | Visual observation test 2 | 96 hours | Unable to be tested because of dissolution | Unable to be tested because of dissolution | Unable to be tested because of dissolution | Unable to be tested because of dissolution | Unable to be tested because of dissolution | |
| | Gel fraction (%) | | | | >99 | 85 | 0 | 89 | >99 | 0 |
| | Crosslink density ×$10^5$ (mol/ml) | | | | 9.2 | | | 5.3 | 9.0 | |
| | Mechanical strength (before crosslinking) | 25°C | 40%R.H. | Tensile breaking elongation (%) | | | 500 | 500 | 500 | |
| | Mechanical strength (after crosslinking) | 25°C | 40%R.H. | Tensile breaking elongation (%) | | | | | | |
| | | | | Tensile breaking strength (MPa) | | | | | | |
| | | | At time of wetting | Tensile breaking elongation (%) | | | | | | |
| | | | | Tensile breaking strength (MPa) | | | | | | |
| | Constant current durability | Voltage reduction rate 1 (hour(s)) | | | 300 | 240 | 220 | 250 | 270 | |
| | | Voltage reduction rate 2 (μV/hr) | | | | | | | | |

*(The number of parts by mass of the crosslinking agent (X) with respect to 100 parts by mass of the polymer electrolyte)

**(The number of parts by mol of the aromatic rings one or more hydrogen atoms of each of which are substituted with hydroxy groups with respect to 100 parts by mol of the ion-conducting group)

As shown in Tables 1 to 4, the polymer electrolyte membrane of the present invention expresses high hot water resistance. As shown in Table 5, the polymer electrolyte membrane of each of Comparative Example 1 and Comparative Examples 3 to 5 is found to express lower hot water resistance than that of the polymer electrolyte membrane of the present invention because the polymer electrolyte membrane is crosslinked with a crosslinking agent except the crosslinking agent (X).

It is assumed that the 4-methylstyrene moiety of the polymer electrolyte membrane of Comparative Example 2 is thermally crosslinked. However, no crosslinking agent is used and hence the membrane is found to have low hot water resistance despite the fact that its ion exchange capacity is lower than that of Example 1.

Examples 1 to 35 show that a polymer electrolyte membrane obtained by crosslinking the block copolymer (Z) with the crosslinking agent (X) has high hot water resistance.

It is found that the polymer electrolyte membrane of Comparative Example 6 cannot be crosslinked with the crosslinking agent (X) because the membrane uses a polymer electrolyte except the block copolymer (Z).

Example 3 shows that even when the crosslinking agent (X) is a polymer, high hot water resistance is similarly obtained as long as the crosslinking agent has, in a molecule thereof, two or more aromatic rings of which one or more hydrogen atoms are substituted with hydroxy groups.

Examples 6 to 11, and Examples 15, 34, and 35 show that even when the usages of the crosslinking agent (X) are different, the polymer electrolyte membranes each have high hot water resistance.

Examples 2, 3, 5, 10, and 12, and Comparative Examples 1 to 5 show that the polymer electrolyte membrane of the present invention, in particular, the polymer electrolyte membrane of the present invention using the poly-4-vinylphenol as a crosslinking agent shows a small reduction in voltage when a fuel cell having incorporated therein the polymer electrolyte membrane is operated. It can be assumed that this is based on the excellent hot water resistance of the polymer electrolyte membrane of the present invention.

Industrial Applicability

The polymer electrolyte membrane of the present invention is suitably used as a polymer electrolyte membrane for a polymer electrolyte fuel cell because the membrane is formed of a fluorine free material, applies small environmental loads at the time of its production and at the time of its disposal, is soft and hardly cracks, and is excellent in hot water resistance.

## Claims

1. A polymer electrolyte membrane, comprising a block copolymer (Z) comprising: a polymer block (A) containing a structural unit derived from an aromatic vinyl compound and having an ion-conducting group; and an amorphous polymer block (B) containing a structural unit derived from an unsaturated aliphatic hydrocarbon and free of any ion-conducting group, the block copolymer (Z) being crosslinked with a crosslinking agent (X) having, in a molecule thereof, two or more aromatic rings of which one or more hydrogen atoms are substituted with hydroxy groups.

2. The polymer electrolyte membrane according to claim 1, wherein the unsaturated aliphatic hydrocarbon comprises a conjugated diene having 4 to 8 carbon atoms.

3. The polymer electrolyte membrane according to claim 1 or 2, wherein the ion-conducting group comprises one or more kinds selected from a sulfonic acid group represented by $-SO_3M$ and a phosphonic acid group represented by $-PO_3HM$ where M represents a hydrogen atom, an ammonium ion, or an alkali metal ion, and salts thereof.

4. The polymer electrolyte membrane according to any one of claims 1 to 3, wherein the block copolymer (Z) further comprises a polymer block (C) containing a structural unit derived from an aromatic vinyl compound and free of any ion-conducting group.

**INTERNATIONAL SEARCH REPORT**

International application No.
PCT/JP2013/071833

A. CLASSIFICATION OF SUBJECT MATTER
*H01M8/02*(2006.01)i, *C08F297/04*(2006.01)i, *C08J3/24*(2006.01)i, *H01B1/06*(2006.01)i, *H01B1/12*(2006.01)i, *H01M8/10*(2006.01)n

According to International Patent Classification (IPC) or to both national classification and IPC

B. FIELDS SEARCHED

Minimum documentation searched (classification system followed by classification symbols)
H01M8/02, C08F297/04, C08J3/24, H01B1/06, H01B1/12, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-258003 A (Kuraray Co., Ltd.), 04 October 2007 (04.10.2007), claims; paragraphs [0033] to [0034], [0064] to [0066] & US 2010/0167159 A1 & EP 1986257 A1 & WO 2007/094185 A1 & KR 10-2008-0093052 A & CN 101385173 A & TW 200805771 A & HK 1128064 A | 1-4 |
| A | WO 2011/065460 A1 (Kuraray Co., Ltd.), 03 June 2011 (03.06.2011), claims; paragraph [0043] (Family: none) | 1-4 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 September, 2013 (10.09.13) | Date of mailing of the international search report<br>08 October, 2013 (08.10.13) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2013/071833

C (Continuation). DOCUMENTS CONSIDERED TO BE RELEVANT

| Category* | Citation of document, with indication, where appropriate, of the relevant passages | Relevant to claim No. |
|---|---|---|
| A | WO 2011/122498 A1 (Kuraray Co., Ltd.), 06 October 2011 (06.10.2011), claims; paragraph [0027] & TW 201203681 A | 1-4 |
| A | WO 2011/145588 A1 (Kuraray Co., Ltd.), 24 November 2011 (24.11.2011), claims; paragraphs [0020], [0026] & TW 201201443 A | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6093114 A
- WO 2006070929 A1
- WO 2012043400 A1